# EUROPEAN PATENT APPLICATION

(11) **EP 4 751 831 A1**
(43) Date of publication of application: **03.06.2026**
(21) Application number: 24938943.8
(22) Date of filing: 24.10.2024
(51) Int. Cl.: B23F 21/10, B23B 27/14

(54) **SKIVING CUTTER**

(30) Priority: 17.05.2024 JP 2024081059
(71) Applicant: Sumitomo Electric Hardmetal Corp., Itami-shi, Hyogo 664-0016 (JP)
(72) Inventor: SHIRO, Kentaro, Itami-shi, Hyogo 664-0016 (JP); HIGASHI, Taisuke, Itami-shi, Hyogo 664-0016 (JP); KUKINO, Satoru, Itami-shi, Hyogo 664-0016 (JP); KIDO, Yasuki, Itami-shi, Hyogo 664-0016 (JP); OKAMURA, Katsumi, Itami-shi, Hyogo 664-0016 (JP); MATSUDA, Yusuke, Itami-shi, Hyogo 664-0016 (JP)
(74) Representative: Boult Wade Tennant LLP
(86) International application number: PCT/JP2024/037954
(87) International publication number: WO 2025/238897

(57) **Abstract**

A skiving cutter is rotatable around an axis. The skiving cutter is provided with a plurality of cutting edges arranged side by side in a form of an annular shape around the axis. The skiving cutter has a base body portion and an edge tip portion. The edge tip portion is contiguous to the base body portion. The edge tip portion is provided to be arranged side by side with the base body portion in a first direction toward a front side of the skiving cutter along the axis. The edge tip portion forms a plurality of cutting edges. The base body portion is composed of a cemented carbide. The edge tip portion is composed of any one of a cubic boron nitride sintered material, a diamond, or a special cemented carbide.

## Description

### TECHNICAL FIELD

The present disclosure relates to a skiving cutter. The present application claims priority based on Japanese Patent Application No. 2024-081059, filed on May 17, 2024. The entire contents of the Japanese Patent Application are incorporated herein by reference.

### BACKGROUND ART

As an exemplary skiving cutter, Japanese Patent Laying-Open No. 2022-045081 (PTL 1) describes a skiving cutter in which a tip of a cutting edge is round-chamfered in a range of a curvature radius of 20 µm or more and 40 µm or less.

### CITATION LIST

### PATENT LITERATURE

PTL 1: Japanese Patent Laying-Open No. 2022-045081

### SUMMARY OF INVENTION

A skiving cutter according to the present disclosure is rotatable around an axis. The skiving cutter is provided with a plurality of cutting edges arranged side by side in a form of an annular shape around the axis. The skiving cutter includes a base body portion and an edge tip portion. The edge tip portion is contiguous to the base body portion. The edge tip portion is provided to be arranged side by side with the base body portion in a first direction toward a front side of the skiving cutter along the axis. The edge tip portion forms the plurality of cutting edges. The base body portion is composed of a cemented carbide. The edge tip portion is composed of any one of a cubic boron nitride sintered material, a diamond, or a special cemented carbide. The special cemented carbide has tungsten carbide grains and a binder phase. The binder phase includes cobalt. In the special cemented carbide, a percentage of a value obtained by dividing a volume of the binder phase by a volume of a whole of the special cemented carbide is 0.7% or more and 28% or less. In the binder phase, a percentage of a value obtained by dividing a mass of the cobalt by a mass of a whole of the binder phase is 50% or more. The binder phase further includes at least one element selected from a group consisting of silicon, phosphorus, germanium, tin, rhenium, ruthenium, osmium, iridium, and platinum.

### BRIEF DESCRIPTION OF DRAWINGS

[Fig. 1] Fig. 1 is a schematic perspective view showing a configuration of a skiving cutter according to a first embodiment.
[Fig. 2] Fig. 2 is a schematic plan view showing the configuration of the skiving cutter according to the first embodiment.
[Fig. 3] Fig. 3 is a schematic bottom view showing the configuration of the skiving cutter according to the first embodiment.
[Fig. 4] Fig. 4 is a schematic cross sectional view along a line IV-IV of Fig. 2.
[Fig. 5] Fig. 5 is an enlarged schematic cross sectional view showing a region V in Fig. 4.
[Fig. 6] Fig. 6 is an enlarged schematic perspective view showing a region VI in Fig. 1.
[Fig. 7] Fig. 7 is an enlarged schematic plan view showing a region VII in Fig. 2.
[Fig. 8] Fig. 8 is a schematic side view showing the configuration of the skiving cutter as viewed in a direction of arrow in Fig. 2.
[Fig. 9] Fig. 9 is a partial schematic cross sectional view illustrating a skiving process using the skiving cutter.
[Fig. 10] Fig. 10 is a schematic plan view illustrating the skiving process using the skiving cutter.
[Fig. 11] Fig. 11 is an enlarged schematic cross sectional view showing a configuration of a skiving cutter according to a second embodiment.
[Fig. 12] Fig. 12 is an enlarged schematic bottom view showing the configuration of the skiving cutter according to the second embodiment.
[Fig. 13] Fig. 13 is a schematic cross sectional view along a line XIII-XIII of Fig. 12.
[Fig. 14] Fig. 14 is a schematic cross sectional view along a line XIV-XIV of Fig. 12.
[Fig. 15] Fig. 15 is a first enlarged schematic cross sectional view showing a modification of the second embodiment.
[Fig. 16] Fig. 16 is a second enlarged schematic cross sectional view showing a modification of the second embodiment.
[Fig. 17] Fig. 17 is a schematic cross sectional view showing a configuration of a skiving cutter according to a third embodiment.
[Fig. 18] Fig. 18 is a schematic perspective view showing a configuration of a skiving cutter according to a fourth embodiment.
[Fig. 19] Fig. 19 is a schematic plan view showing the configuration of the skiving cutter according to the fourth embodiment.
[Fig. 20] Fig. 20 is a schematic bottom view showing the configuration of the skiving cutter according to the fourth embodiment.
[Fig. 21] Fig. 21 is an enlarged schematic view showing a region XXI in Fig. 20.
[Fig. 22] Fig. 22 is a schematic cross sectional view along a line XXII-XXII of Fig. 21.
[Fig. 23] Fig. 23 is a schematic cross sectional view along a line XXIII-XXIII of Fig. 21.
[Fig. 24] Fig. 24 is a schematic side view showing a configuration of an edge portion as viewed along an arrow E in Fig. 19.
[Fig. 25] Fig. 25 is a schematic perspective view showing a configuration of a skiving cutter according to a fifth embodiment.
[Fig. 26] Fig. 26 is a schematic cross sectional view showing the configuration of the skiving cutter according to the fifth embodiment.

### DETAILED DESCRIPTION

### [Problem to be Solved by the Present Disclosure]

According to the skiving cutter described in PTL 1, the tip of the cutting edge is round-chamfered and the cutting edge may be therefore significantly worn.

An object of the present disclosure is to provide a skiving cutter in which wear of a cutting edge can be suppressed.

### [Advantageous Effect of the Present Disclosure]

According to the present disclosure, it is possible to provide a skiving cutter in which wear of a cutting edge can be suppressed.

### [Description of Embodiments]

First, embodiments of the present disclosure will be listed and described.
(1) A skiving cutter according to the present disclosure is rotatable about an axis. The skiving cutter is provided with a plurality of cutting edges arranged side by side in a form of an annular shape around the axis. The skiving cutter has a base body portion and an edge tip portion. The edge tip portion is contiguous to the base body portion. The edge tip portion is provided to be arranged side by side with the base body portion in a first direction toward a front side of the skiving cutter along the axis. The edge tip portion forms a plurality of cutting edges. The base body portion is composed of a cemented carbide. The edge tip portion is composed of any one of a cubic boron nitride sintered material, a diamond, or a special cemented carbide. The special cemented carbide has tungsten carbide grains and a binder phase. The binder phase includes cobalt. In the special cemented carbide, a percentage of a value obtained by dividing a volume of the binder phase by a volume of a whole of the special cemented carbide is 0.7% or more and 28% or less. In the binder phase, a percentage of a value obtained by dividing a mass of the cobalt by a mass of a whole of the binder phase is 50% or more. The binder phase further includes at least one element selected from a group consisting of silicon, phosphorus, germanium, tin, rhenium, ruthenium, osmium, iridium, and platinum. Thus, wear of the cutting edge can be suppressed.
(2) The skiving cutter according to (1) may have a stem portion and a plurality of edge portions. The stem portion may have an outer peripheral surface. The outer peripheral surface may be provided around the axis. Each of the plurality of edge portions may be contiguous to the stem portion. Each of the plurality of edge portions may extend from the outer peripheral surface outward in a radial direction. Each of the plurality of edge portions may form one of the plurality of cutting edges. Each of the plurality of edge portions may have a first flank face portion and a second flank face portion. The first flank face portion may be formed by the edge tip portion. The first flank face portion may be contiguous to a corresponding one of the plurality of cutting edges. The second flank face portion may be formed by the base body portion. The second flank face portion may be provided in a second direction toward a rear side of the skiving cutter along the axis with respect to the first flank face portion. The edge tip portion may have a first bottom surface portion and a second bottom surface portion. The first bottom surface portion may be in contact with the base body portion. The second bottom surface portion may be contiguous to each of the first flank face portion and the first bottom surface portion. The second bottom surface portion may be provided outward with respect to the base body portion. A ridgeline between the first flank face portion and the second bottom surface portion may have a first ridgeline portion, a corner ridgeline portion, and a second ridgeline portion. The corner ridgeline portion may be contiguous to the first ridgeline portion. The corner ridgeline portion may be provided outward in the radial direction with respect to the first ridgeline portion. The second ridgeline portion may be contiguous to the corner ridgeline portion. The second ridgeline portion may be provided in a rotation direction with respect to the first ridgeline portion. When a length of the second bottom surface portion between the first ridgeline portion and the second flank face portion in a cross section perpendicular to a tangent of the first ridgeline portion as viewed along the axis is defined as a first length, and when a length of the second bottom surface portion between the second ridgeline portion and the second flank face portion in a cross section perpendicular to a tangent of the second ridgeline portion as viewed along the axis is defined as a second length, the first length may be equal to the second length.

Thus, wear of the flank face can be effectively suppressed in the case where the thickness of a chip is substantially the same between two different points on the cutting edge.

(3) The skiving cutter according to (1) may have a stem portion and a plurality of edge portions. The stem portion may have an outer peripheral surface. The outer peripheral surface may be provided around the axis. Each of the plurality of edge portions may be contiguous to the stem portion. Each of the plurality of edge portions may extend from the outer peripheral surface outward in a radial direction. Each of the plurality of edge portions may form one of the plurality of cutting edges. Each of the plurality of edge portions may have a first flank face portion and a second flank face portion. The first flank face portion may be formed by an edge tip portion. The first flank face portion may be contiguous to a corresponding one of the plurality of cutting edges. The second flank face portion may be formed by the base body portion. The second flank face portion may be provided in a second direction toward a rear side of the skiving cutter along the axis with respect to the first flank face portion. The edge tip portion may have a first bottom surface portion and a second bottom surface portion. The first bottom surface portion may be in contact with the base body portion. The second bottom surface portion may be contiguous to each of the first flank face portion and the first bottom surface portion. The second bottom surface portion may be provided outward with respect to the base body portion. A ridgeline between the first flank face portion and the second bottom surface portion may have a first ridgeline portion, a corner ridgeline portion, and a second ridgeline portion. The corner ridgeline portion may be contiguous to the first ridgeline portion. The corner ridgeline portion may be provided outward in the radial direction with respect to the first ridgeline portion. The second ridgeline portion may be contiguous to the corner ridgeline portion. The second ridgeline portion may be provided in a rotation direction with respect to the first ridgeline portion. When a length of the second bottom surface portion between the first ridgeline portion and the second flank face portion in a cross section perpendicular to a tangent of the first ridgeline portion as viewed along the axis is defined as a first length, and when a length of the second bottom surface portion between the second ridgeline portion and the second flank face portion in a cross section perpendicular to a tangent of the second ridgeline portion as viewed along the axis is defined as a second length, the first length may be different from the second length.

Thus, wear of the flank face can be effectively suppressed in the case where the thickness of a chip is different between two different points on the cutting edge.

(4) **In** the skiving cutter according to (2) or (3), each of the plurality of edge portions may have a rake face and a rear end surface. The rake face may be contiguous to a corresponding one of the plurality of cutting edges. The rake face may be formed by the edge tip portion. The rear end surface may be located opposite to the rake face. The rear end surface may be formed by the base body portion. As viewed along the axis, the rear end surface may be overlapped with the rake face.

(5) In the skiving cutter according to (2) or (3), each of the plurality of edge portions may have a rake face and a rear end surface. The rake face may be contiguous to a corresponding one of the plurality of cutting edges. The rake face may be formed by the edge tip portion. The rear end surface may be located opposite to the rake face. The rear end surface may be formed by the base body portion. As viewed along the axis, the rake face may be provided in the rotation direction with respect to the rear end surface.

(6) In the skiving cutter according to any one of (1) to (5), a maximum thickness of the edge tip portion may be 0.3 mm or more and 5 mm or less in the first direction. Thus, it is possible to suppress fracture of the edge tip portion while suppressing wear of the edge tip portion.

(7) The skiving cutter according to any one of (1) to (6) may have a coating film. The coating film may coat at least a portion of the edge tip portion. Thus, wear of the edge tip portion can be suppressed.

(8) In the skiving cutter according to any one of (1) to (7), in a cross section perpendicular to each of the plurality of cutting edges, a curvature radius of the cutting edge may be 10 µm or more and 40 µm or less. Thus, it is possible to suppress an excessive decrease in sharpness of the cutting edge while suppressing breakage of a portion of the skiving cutter close to the cutting edge.

(9) In the skiving cutter according to any one of (1) to (8), the edge tip portion may be composed of a cubic boron nitride sintered material. The cubic boron nitride sintered material may include cubic boron nitride grains. In the cubic boron nitride sintered material, a percentage of a value obtained by dividing a volume of the cubic boron nitride grains by a volume of a whole of the cubic boron nitride sintered material may be 50% or more and 100% or less. In the cubic boron nitride sintered material, an average grain size of the cubic boron nitride grain may be 0.01 µm or more and 3 µm or less. Thus, breakage of the edge tip portion can be effectively suppressed.

(10) In the skiving cutter according to (9), in the cubic boron nitride sintered material, the percentage of the value obtained by dividing the volume of the cubic boron nitride grains by the volume of the whole of the cubic boron nitride sintered material may be less than 100%. The cubic boron nitride sintered material may include a binder. The binder may include at least one element selected from a group consisting of titanium, cobalt, aluminum, and zirconium. Thus, wear of the edge tip portion can be effectively suppressed.

(11) The skiving cutter according to (1) may have a stem portion and a plurality of edge portions. The stem portion may have an outer peripheral surface. The outer peripheral surface may be provided around the axis. Each of the plurality of edge portions may be contiguous to the stem portion. Each of the plurality of edge portions may extend from the outer peripheral surface outward in a radial direction. Each of the plurality of edge portions may form one of the plurality of cutting edges. Each of the plurality of edge portions may have a rake face and a flank face. The rake face may be contiguous to a corresponding one of the plurality of cutting edges. The rake face may be formed by the edge tip portion. The flank face may be contiguous to the rake face via the corresponding one of the plurality of cutting edges. In each of the plurality of edge portions, a point located on an outermost periphery as viewed along the axis may be defined as an outermost peripheral point. In each of the plurality of edge portions, in a cross section including the axis and passing through the outermost peripheral point, an angle between a straight line perpendicular to the axis and the rake face may be 0° or more and 40° or less. In each of the plurality of edge portions, as viewed in a direction perpendicular to the axis and extending from the outermost peripheral point toward the axis, an angle between a ridgeline of the flank face and the axis may be 0° or more and 40° or less. Thus, wear of the edge tip portion can be suppressed.

(12) In the skiving cutter according to any one of (1) to (11), the edge tip portion may be composed of the diamond. The diamond may be a polycrystalline diamond including a plurality of diamond grains. In the diamond, a percentage of a value obtained by dividing a volume of the plurality of diamond grains by a volume of a whole of the diamond may be 80% or more and 100% or less. Thus, it is possible to suppress excessive decrease in strength of the edge tip portion.

(13) In the skiving cutter according to (12), an average grain size of the plurality of diamond grains may be 0.01 µm or more and less than 100 µm. Thus, it is possible to suppress excessive decrease in the strength of the edge tip portion.

(14) In the skiving cutter according to any one of (1) to (11), the edge tip portion may be composed of the diamond. The diamond may be a single-crystal diamond. Thus, the strength of the edge tip portion can be improved.

### [Details of Embodiments of the Present Disclosure]

Next, embodiments of the present disclosure will be described in detail with reference to figures. It should be noted that in each of the following figures, the same or corresponding portions are denoted by the same reference characters and will not be described repeatedly.

### (First Embodiment)

First, a configuration of a skiving cutter 100 according to a first embodiment will be described.

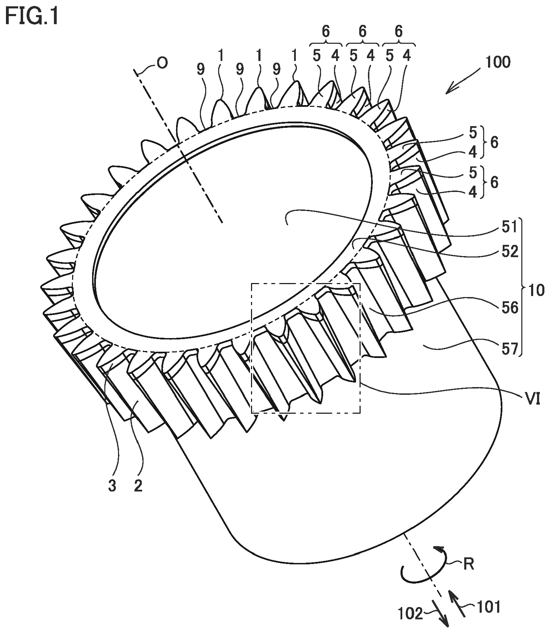

As shown in Fig. 1, skiving cutter 100 has a plurality of cutting edges 1, a stem portion 10, and a plurality of edge portions 6. Skiving cutter 100 is rotatable around an axis O. The plurality of cutting edges 1 are arranged side by side in the form of an annular shape around axis O.

Stem portion 10 is a portion to face a tool spindle (not shown) that rotates skiving cutter 100. Stem portion 10 extends, for example, along axis O. Each of the plurality of edge portions 6 is contiguous to stem portion 10. The plurality of edge portions 6 are provided to be arranged side by side in the form of an annular shape around axis O. Each of the plurality of edge portions 6 forms one of the plurality of cutting edges 1. From another viewpoint, it can be said that in skiving cutter 100, the number of cutting edges 1 is the same as the number of edge portions 6.

Skiving cutter 100 is used, for example, for processing of a metal material. Specifically, skiving cutter 100 is used for processing of a hardened steel, for example. Skiving cutter 100 is used, for example, for processing of a high-hardness material. More specifically, skiving cutter 100 is used for processing of a high-hardness material having a Rockwell hardness C scale (HRC) of 50 HRC or more, for example.

As shown in Fig. 1, stem portion 10 has a first outer peripheral surface 56 and a second outer peripheral surface 57. First outer peripheral surface 56 is provided around axis O. First outer peripheral surface 56 includes a boundary surface between stem portion 10 and each of the plurality of edge portions 6. First outer peripheral surface 56 has an annular shape. First outer peripheral surface 56 surrounds axis O.

Second outer peripheral surface 57 is provided in a second direction 102 with respect to first outer peripheral surface 56. Second outer peripheral surface 57 has an annular shape. Second outer peripheral surface 57 surrounds axis O. It should be noted that second direction 102 is a direction toward the rear side of skiving cutter 100 along axis O. Conversely, a direction toward the front side of skiving cutter 100 along axis O is defined as a first direction 101. First direction 101 and second direction 102 are parallel to each other.

Stem portion 10 has a first front end surface 51 and a second front end surface 52. First front end surface 51 intersects axis O, for example. Second front end surface 52 has an annular shape. Second front end surface 52 surrounds axis O. Second front end surface 52 is contiguous to first outer peripheral surface 56.

Each of the plurality of edge portions 6 extends from first outer peripheral surface 56 outward in the radial direction. In the present specification, the expression "outward in the radial direction" refers to a direction perpendicular to axis O and extending from axis O toward first outer peripheral surface 56. Conversely, a direction perpendicular to axis O and extending from first outer peripheral surface 56 toward axis O is referred to as "inward in the radial direction".

Each of the plurality of edge portions 6 has a rake face 5 and a flank face 4. From another viewpoint, it can be said that skiving cutter 100 has a plurality of rake faces 5 and a plurality of flank faces 4. Each of rake faces 5 is contiguous to second front end surface 52.

Each of flank faces 4 is provided in second direction 102 with respect to cutting edge 1. Flank face 4 is contiguous to rake face 5. Each of ridgelines between flank faces 4 and rake faces 5 forms one of the plurality of cutting edges 1. From another viewpoint, it can be said that rake face 5 is contiguous to a corresponding one of the plurality of cutting edges 1. Flank face 4 is contiguous to the corresponding one of the plurality of cutting edges 1. Flank face 4 is contiguous to rake face 5 via the corresponding one of the plurality of cutting edges 1.

Skiving cutter 100 has a plurality of bottom portions 9. The plurality of bottom portions 9 and the plurality of cutting edges 1 form an outer peripheral edge of skiving cutter 100. The plurality of cutting edges 1 and the plurality of bottom portions 9 are alternately arranged side by side around axis O. From another viewpoint, it can be said that each of the plurality of bottom portions 9 is provided between two adjacent cutting edges 1 of the plurality of cutting edges 1.

The plurality of bottom portions 9 are provided inward in the radial direction with respect to the plurality of cutting edges 1. A portion of each of the plurality of bottom portions 9 is formed by a ridgeline between second front end surface 52 and first outer peripheral surface 56.

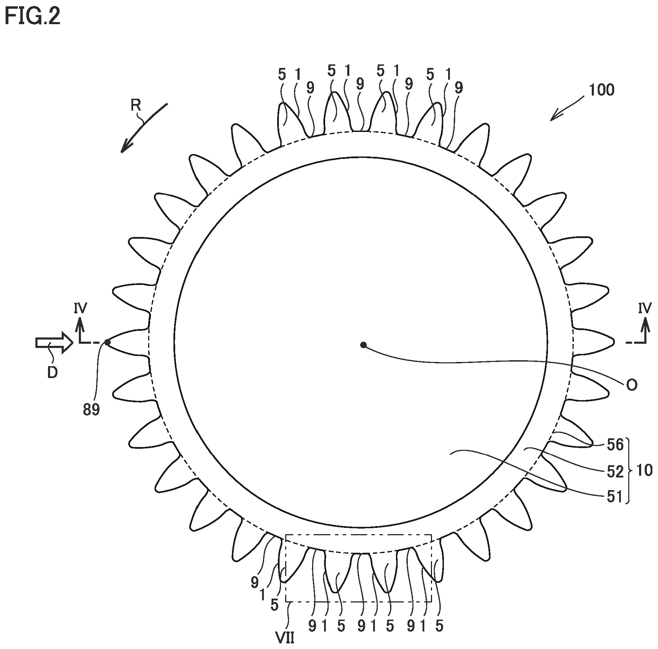

As shown in Fig. 2, as skiving cutter 100 is viewed in second direction 102 (hereinafter, also described as "as viewed in a plan view"), the shape of first front end surface 51 is, for example, a circular shape. As viewed in the plan view, second front end surface 52 surrounds first front end surface 51. As viewed along axis O, rake face 5 is provided outward in the radial direction with respect to second front end surface 52. As viewed along axis O, the plurality of cutting edges 1 are provided on the outermost periphery of skiving cutter 100.

In each of the plurality of edge portions 6, a point located at the outermost periphery as viewed along axis O is defined as an outermost peripheral point 89. As viewed along axis O, in each of the plurality of edge portions 6, outermost peripheral point 89 is located at a position at which a distance from axis O is the maximum. For ease of explanation, only one outermost peripheral point 89 is shown in Fig. 2; however, in skiving cutter 100, the number of outermost peripheral points 89 is equal to the number of the plurality of edge portions 6.

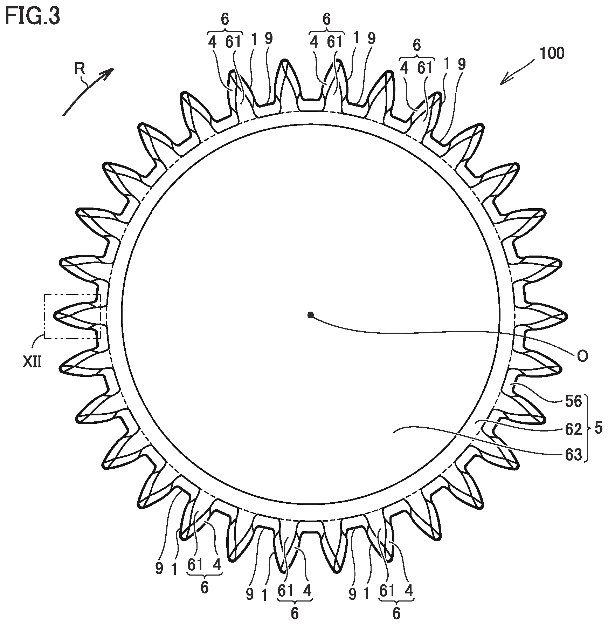

Fig. 3 shows the configuration of skiving cutter 100 as viewed in first direction 101. As shown in Fig. 3, each of the plurality of edge portions 6 has a first rear end surface 61. First rear end surface 61 is contiguous to flank face 4. In each of the plurality of edge portions 6, first rear end surface 61 is located opposite to rake face 5 (see Fig. 2).

Stem portion 10 has a second rear end surface 62 and a third rear end surface 63. Second rear end surface 62 is contiguous to first rear end surface 61. As viewed in first direction 101 (hereinafter, also described as "as viewed in a bottom view"), second rear end surface 62 has an annular shape. First rear end surface 61 extends outward in the radial direction with respect to second rear end surface 62. Third rear end surface 63 intersects axis O, for example. As viewed in the bottom view, the shape of third rear end surface 63 is, for example, a circular shape.

As shown in Figs. 1 to 3, the shape of skiving cutter 100 is a spur gear shape. Specifically, the direction in which each of the plurality of edge portions 6 extends is substantially parallel to axis O. From another perspective, it can be said that as shown in Figs. 2 and 3, first rear end surface 61 is overlapped with rake face 5 as viewed along axis O. In other words, as viewed in first direction 101 or second direction 102, first rear end surface 61 is overlapped with rake face 5. As viewed along axis O, first rear end surface 61 is separated from the plurality of cutting edges 1. Skiving cutter 100 having such a spur gear shape is used in processing for forming a helical gear in a workpiece.

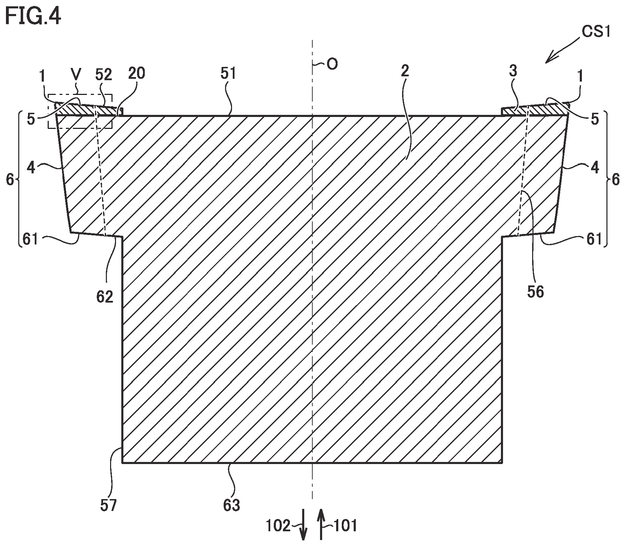

The cross section shown in Fig. 4 is a cross section perpendicular to each of the plurality of cutting edges 1 and including axis O. Hereinafter, the cross section perpendicular to each of the plurality of cutting edges 1 and including axis O is also referred to as "first cross section CS1". As shown in Fig. 4, skiving cutter 100 mainly has a base body portion 2 and an edge tip portion 3.

Base body portion 2 forms, for example, a portion of each of the plurality of edge portions 6 and a portion of stem portion 10. Base body portion 2 forms each of first front end surface 51, first rear end surface 61, second rear end surface 62, and third rear end surface 63. In second direction 102, base body portion 2 extends, for example, from first front end surface 51 to third rear end surface 63.

Base body portion 2 has a seating surface 20. Seating surface 20 is in contact with edge tip portion 3. In base body portion 2, seating surface 20 is contiguous to, for example, first front end surface 51. Seating surface 20 has, for example, a planar shape. Seating surface 20 is, for example, perpendicular to axis O.

Base body portion 2 is composed of a cemented carbide. Specifically, the cemented carbide of base body portion 2 includes tungsten carbide and cobalt. In the cemented carbide of base body portion 2, a percentage of a value obtained by dividing the weight of the tungsten carbide by the weight of the whole of the cemented carbide is 90.0% or more and 95.0% or less, and a percentage of a value obtained by dividing the weight of the cobalt by the weight of the whole of the cemented carbide is 4.0% or more and 9.0% or less.

Edge tip portion 3 is contiguous to base body portion 2. In the present specification, a state in which two members are contiguous to each other means a state in which the two members are at least in contact with each other by sintering, fastening, or the like. The two members contiguous to each other may be integrated or separated. Edge tip portion 3 forms the plurality of cutting edges 1. Edge tip portion 3 is provided to be arranged side by side with base body portion 2 in first direction 101. Specifically, edge tip portion 3 is provided on seating surface 20. Edge tip portion 3 is provided in first direction 101 with respect to base body portion 2. The plurality of cutting edges 1 are provided at the front end of skiving cutter 100.

Edge tip portion 3 forms a portion of each of the plurality of edge portions 6. From another viewpoint, it can be said that each of the plurality of edge portions 6 is formed by edge tip portion 3 and base body portion 2. Edge tip portion 3 forms rake face 5. Edge tip portion 3 forms, for example, second front end surface 52.

Edge tip portion 3 has a first bottom surface 30. First bottom surface 30 is in contact with base body portion 2. Specifically, first bottom surface 30 is in contact with seating surface 20 of base body portion 2. First bottom surface 30 is covered with, for example, base body portion 2. First bottom surface 30 has, for example, a planar shape. First bottom surface 30 is, for example, perpendicular to axis O.

The shape of edge tip portion 3 is, for example, an annular shape. Edge tip portion 3 is composed of any one of a cubic boron nitride (cBN) sintered material, a diamond, or a special cemented carbide. Details of each of the cBN sintered material, the diamond, and the special cemented carbide will be described later.

As shown in Fig. 4, in first cross section CS1, flank face 4 is inclined inward in the radial direction with respect to axis O. Specifically, in first cross section CS1, a distance in first direction 101 between flank face 4 and axis O becomes shorter as further away from cutting edge 1.

First front end surface 51 is, for example, perpendicular to axis O. Second front end surface 52 is provided in first direction 101 with respect to first front end surface 51. Second front end surface 52 is inclined in first direction 101 with respect to a plane perpendicular to axis O. Rake face 5 is provided in first direction 101 with respect to second front end surface 52. Rake face 5 is inclined in first direction 101 with respect to the plane perpendicular to axis O. Specifically, in first cross section CS1, a distance in first direction 101 between rake face 5 and seating surface 20 becomes shorter as further away from cutting edge 1.

First rear end surface 61 is inclined in first direction 101 with respect to the plane perpendicular to axis O. Second rear end surface 62 is provided in second direction 102 with respect to first rear end surface 61. Second rear end surface 62 is inclined in first direction 101 with respect to the plane perpendicular to axis O.

Third rear end surface 63 is provided in second direction 102 with respect to second rear end surface 62. Third rear end surface 63 is located opposite to first front end surface 51. Third rear end surface 63 may be parallel to first front end surface 51, for example. Third rear end surface 63 is, for example, perpendicular to axis O.

Second outer peripheral surface 57 is contiguous to each of second rear end surface 62 and third rear end surface 63. Second outer peripheral surface 57 is provided in second direction 102 with respect to first outer peripheral surface 56. Second outer peripheral surface 57 extends along first direction 101.

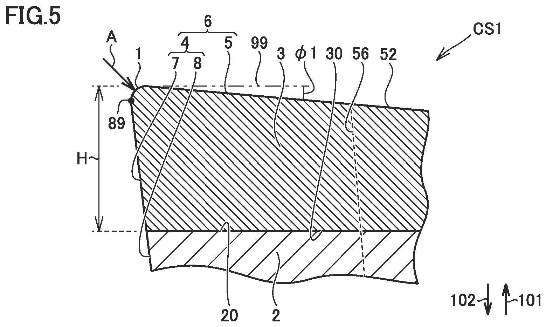

As shown in Fig. 5, in a cross section perpendicular to each of the plurality of cutting edges 1, cutting edge 1 has, for example, an arc shape. In the cross section perpendicular to each of the plurality of cutting edges 1, curvature radius A of cutting edge 1 is 10 µm or more and 40 µm or less. Curvature radius A may be, for example, 12 µm or more, or 15 µm or more. Curvature radius A may be, for example, 38 µm or less, or 35 µm or less.

As shown in Fig. 5, each of the plurality of edge portions 6 has a first flank face portion 7 and a second flank face portion 8. First flank face portion 7 and second flank face portion 8 form flank face 4. First flank face portion 7 is formed by edge tip portion 3. First flank face portion 7 is contiguous to a corresponding one of the plurality of cutting edges 1.

Second flank face portion 8 is formed by base body portion 2. Second flank face portion 8 is provided in second direction 102 with respect to first flank face portion 7. Second flank face portion 8 is contiguous to first flank face portion 7, for example. Second flank face portion 8 is contiguous to first rear end surface 61 (see Fig. 4). First flank face portion 7 and second flank face portion 8 are smoothly connected, for example.

Maximum thickness H of edge tip portion 3 in first direction 101 is, for example, 0.3 mm or more and 5 mm or less. Maximum thickness H may be, for example, 0.5 mm or more, or 1 mm or more. Maximum thickness H may be, for example, 4.5 mm or less, or 4 mm or less. Maximum thickness H of edge tip portion 3 is the longest distance between each of the plurality of cutting edges 1 and first bottom surface 30 in first direction 101.

As shown in Fig. 5, first cross section CS1 may pass through outermost peripheral point 89. From another viewpoint, it can be said that the cross section shown in Fig. 5 is a cross section including axis O (see Fig. 4) and passing through outermost peripheral point 89. A straight line 99 shown in Fig. 5 is a straight line perpendicular to axis O. In the cross section including axis O and passing through outermost peripheral point 89, an angle between straight line 99 and rake face 5 is defined as a rake angle φ1.

In each of the plurality of edge portions, rake angle φ1 is, for example, 0° or more and 40° or less. Rake angle φ1 may be, for example, 5° or more and 15° or less. Rake angle φ1 may be, for example, 3°or more, or 8° or more. Rake angle φ1 may be, for example, 30° or less, 18° or less, or 13° or less.

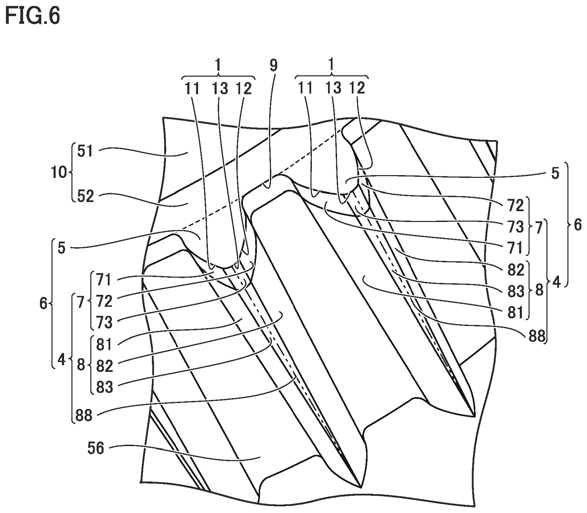

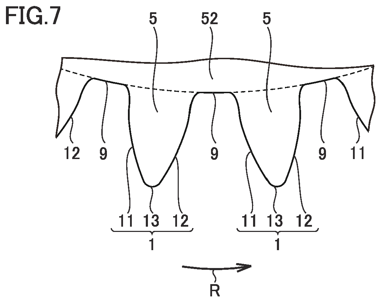

As shown in Figs. 6 and 7, each of the plurality of cutting edges 1 is formed by a first cutting edge portion 11, a second cutting edge portion 12, and a corner cutting edge portion 13.

Second cutting edge portion 12 is provided in a rotation direction R with respect to first cutting edge portion 11. Second cutting edge portion 12 faces first cutting edge portion 11. Corner cutting edge portion 13 connects first cutting edge portion 11 and second cutting edge portion 12. Corner cutting edge portion 13 is provided outward in the radial direction with respect to each of first cutting edge portion 11 and second cutting edge portion 12. In each of the plurality of cutting edges 1, corner cutting edge portion 13 is provided between first cutting edge portion 11 and second cutting edge portion 12. As viewed in a plan view, corner cutting edge portion 13 has, for example, an arc shape.

As shown in Fig. 6, first flank face portion 7 has a first portion 71, a first corner surface portion 73, and a second portion 72. A ridgeline between first portion 71 and rake face 5 forms first cutting edge portion 11. First corner surface portion 73 is contiguous to first portion 71. A ridgeline between first corner surface portion 73 and rake face 5 forms corner cutting edge portion 13. Second portion 72 is contiguous to first corner surface portion 73. A ridgeline between second portion 72 and rake face 5 forms second cutting edge portion 12.

Second flank face portion 8 has a third portion 81, a second corner surface portion 83, and a fourth portion 82. Third portion 81 is contiguous to each of first portion 71 and first rear end surface 61 (see Fig. 3). Second corner surface portion 83 is contiguous to each of first corner surface portion 73, first rear end surface 61, and third portion 81. Fourth portion 82 is contiguous to each of second portion 72, first rear end surface 61, and second corner surface portion 83. As shown in Fig. 6, a line located on flank face 4 and passing through the tip of each of the plurality of edge portions 6 is defined as a ridgeline 88 of flank face 4.

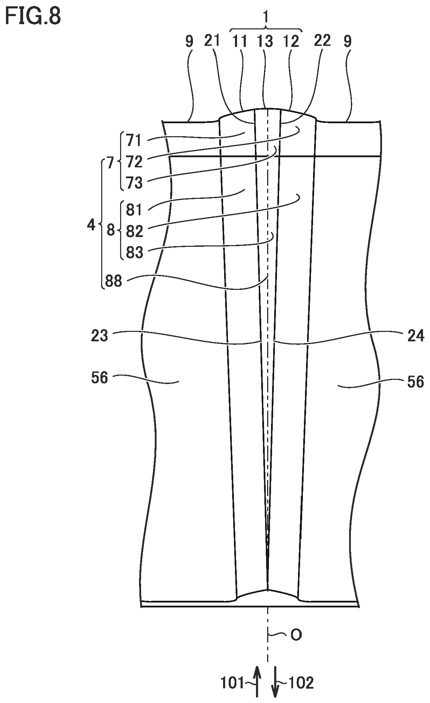

Fig. 8 is a schematic side view showing the configuration of skiving cutter 100 as viewed in a direction of arrow D in Fig. 2. The direction of arrow D is a direction perpendicular to axis O and extending from outermost peripheral point 89 toward axis O.

As shown in Fig. 8, as viewed in the direction perpendicular to axis O and extending from outermost peripheral point 89 toward axis O, ridgeline 88 is located at an intermediate position between a boundary line (first boundary line 21) between first portion 71 and first corner surface portion 73 and a boundary line (second boundary line 22) between second portion 72 and first corner surface portion 73. From another viewpoint, it can be said that as viewed in the direction perpendicular to axis O and extending from outermost peripheral point 89 toward axis O, a distance between ridgeline 88 and first boundary line 21 is the same as a distance between ridgeline 88 and second boundary line 22 in the direction perpendicular to ridgeline 88.

Similarly, as viewed in the direction perpendicular to axis O and extending from outermost peripheral point 89 toward axis O, ridgeline 88 is located at an intermediate position between a boundary line (third boundary line 23) between third portion 81 and second corner surface portion 83 and a boundary line (fourth boundary line 24) between fourth portion 82 and second corner surface portion 83. From another viewpoint, it can be said that as viewed in the direction perpendicular to axis O and extending from outermost peripheral point 89 toward axis O, a distance between ridgeline 88 and third boundary line 23 is the same as a distance between ridgeline 88 and fourth boundary line 24 in the direction perpendicular to ridgeline 88.

Ridgeline 88 may be parallel to axis O, for example. In other words, as viewed in the direction perpendicular to axis O and extending from outermost peripheral point 89 toward axis O, an angle between ridgeline 88 and axis O may be, for example, 0°. First corner surface portion 73 extends along ridgeline 88. Second corner surface portion 83 extends along ridgeline 88.

### (cBN Sintered Material)

Next, details of the cBN sintered material will be described. The cBN sintered material includes cBN grains. In the cBN sintered material, a percentage (cBN grain content ratio) of a value obtained by dividing the volume of the cBN grains by the volume of the whole of the cBN sintered material is, for example, 50% or more and 100% or less. The cBN grain content ratio may be, for example, 70% or more, 80% or more, or 90% or more. The cBN grain content ratio may be, for example, 99% or less, or 97% or less.

The average grain size (D₅₀) of the cBN grains is, for example, 0.01 µm or more and 3 µm or less. The average grain size of the cBN grains may be, for example, 0.03 µm or more, or 0.08 µm or more. The average grain size of the cBN grains may be, for example, 2 µm or less, 1.5 µm or less, or 0.7 µm or less.

The cBN sintered material may include a binder. The binder binds the cBN grains. When the cBN sintered material includes the binder, the cBN grain content ratio in the cBN sintered material is less than 100%. The cBN sintered material may be constituted of the cBN grains and the binder, or may be constituted of the cBN grains, the binder, and an inevitable impurity.

The binder includes, for example, at least one element selected from a group consisting of titanium (Ti), cobalt (Co), aluminum (Al), and zirconium (Zr). Specifically, the binder includes, for example, at least one of titanium nitride (TiN), cobalt, titanium carbide (TiC), titanium carbonitride (TiCN), aluminum oxide (Al₂O₃), zirconia (ZrO₂), and aluminum nitride (AlN).

### (cBN Grain Content Ratio)

In the above cBN sintered material, the cBN grain content ratio can be confirmed by performing structure observation, element analysis, and the like on the cBN sintered material using an energy dispersive X-ray spectrometer (EDX: Energy Dispersive X-ray Spectroscopy) accompanied with a scanning electron microscope (SEM: Scanning Electron Microscope). As the SEM, "JSM-7800F" (product name) provided by JEOL can be used. As the EDX, an Octane Elect (octane elect) EDS system can be used. Hereinafter, the EDX accompanied with the SEM is also referred to as SEM-EDX. A specific measurement method is as follows.

(A1) First, the cBN sintered material is cut at any position so as to produce a sample including a cross section of the cBN sintered material. A focused ion beam apparatus, a cross section polisher apparatus, or the like can be used to produce the cross section. Next, the cross section is observed by the SEM at a magnification of 1000 times so as to obtain a reflected electron image. In the reflected electron image, a region in which the cBN grains are present is a black region, whereas a region in which the binder is present is a gray region and/or a white region.

(B1) Next, the reflected electron image is subjected to binarization processing using image analysis software ("WinROOF" from Mitani Corporation). In the image having been through the binarization processing, the region in which the cBN grains are present (black region in the reflected electron image) becomes a dark visual field, and the region in which the binder is present (gray region and/or white region in the reflected electron image) becomes a bright visual field. A measurement region (70 µm × 100 µm) is set in the image having been through the binarization processing. An area ratio of pixels originated from the dark visual field (pixels originated from the cBN grains; pixels originated from the black region in the reflected electron image) in the entire area of the measurement visual field is calculated. The calculated area ratio is regarded as a volume ratio, thereby finding the cBN grain content ratio.

It should be noted that as long as the measurement is performed on the same edge tip portion 3 by the above-described method, it has been confirmed that there is no variation in measurement results even when the measurement position is freely changed.

### (Binder)

The fact "the binder includes at least one element selected from the group consisting of Ti, Co, Al, and Zr" can be specified by XRD (X-ray diffraction measurement; X-ray Diffraction). That is, the fact "the binder includes at least one element selected from the group consisting of Ti, Co, Al, and Zr" means that at least one element selected from the group consisting of Ti, Co, Al, and Zr is present in the binder to such an extent that the element is detected by the XRD.

### (Average Grain Size of cBN Grains)

The average grain size of the cBN grains is determined as follows. First, in accordance with the above-described method of determining the cBN grain content ratio, the sample including the cross section of the cBN sintered material is produced and the reflected electron image is obtained. Next, the equivalent circle diameter of each dark visual field (corresponding to cBN) in the reflected electron image is calculated using image analysis software ("WinROOF (ver. 7.4.5)" from Mitani Corporation). It is preferable to calculate the equivalent circle diameters of 100 or more cBN grains by observing 5 or more visual fields.

Next, the equivalent circle diameters are arranged in an ascending order from the minimum value to the maximum value, thereby finding a cumulative distribution. A grain size corresponding to a cumulative area of 50% in the cumulative distribution is the average grain size. The equivalent circle diameter means the diameter of a circle having the same area as the area of the measured cBN grain.

### (Diamond)

Next, the diamond will be described in detail. The diamond is a polycrystalline diamond or a single-crystal diamond (SCD: Single-Crystal Diamond).

The polycrystalline diamond includes a plurality of diamond grains. The polycrystalline diamond may include a binder phase (binder). The binder phase includes, for example, one of at least one element selected from iron (Fe), cobalt (Co), and nickel (Ni), and a mutual solid solution thereof. Specifically, the binder phase is composed of, for example, Co, Co-Fe, Ni-Co, or the like. In the description below, the polycrystalline diamond including the binder phase is also referred to as polycrystalline sintered diamond or PCD (Poly-Crystalline Diamond).

The polycrystalline diamond may include no binder phase. In the description below, the polycrystalline diamond including no binder phase is also referred to as a binderless polycrystalline diamond or BLPCD. The BLPCD is a polycrystalline diamond in which a plurality of diamond grains are bound together without a binder. In the present specification, the polycrystalline diamond includes the PCD and the BLPCD.

The BLPCD is produced by converting graphite into diamond grains using, for example, a high temperature and high pressure synthesis (HTHP: High Temperature and High Pressure) method and sintering the diamond grains without using the binder phase. More specifically, for example, at a high temperature of 1800°C or more and 2500°C or less and a high pressure of 15 GPa or more and 25 GPa or less, the graphite is directly converted into the diamond grains and the diamond grains are sintered, thereby producing the BLPCD.

The PCD is produced by, for example, sintering a mixture in which a raw material powder for the binder phase and the diamond grains produced by the HTHP method or the like are mixed. The SCD is formed by using the HTHP method, a chemical vapor deposition (CVD: chemical vapor deposition) method, or the like.

When the diamond is the polycrystalline diamond, the percentage (diamond grain content ratio) of the value obtained by dividing the volume of the diamond grains by the volume of the whole of the diamond is, for example, 80% or more and 100% or less. The diamond grain content ratio may be, for example, 85% or more, 92% or more, or 97% or more. The diamond grain content ratio may be, for example, 99% or less or 98% or less. The diamond grain content ratio can be measured using, for example, secondary ion mass spectrometry (SIMS: Secondary Ion Mass Spectrometry).

In the BLPCD, a percentage of a value obtained by dividing the volume of carbon by the volume of the BLPCD except for an impurity element is 100%. In the BLPCD, a value (impurity element content ratio) obtained by dividing the volume of the impurity element by the mass of the whole of the BLPCD is, for example, 5% or less. In the BLPCD, the impurity element content ratio may be 0%.

When the diamond is the polycrystalline diamond, the average grain size (D₅₀) of the diamond grains is, for example, 0.01 µm or more and less than 100 µm. The average grain size of the diamond grains may be, for example, 0.05 µm or more, or 0.1 µm or more. The average grain size of the diamond grains may be, for example, 70 µm or less, 40 µm or less, 10 µm or less, or 1 µm or less.

The average grain size of the diamond grains can be measured using the SEM and the image analysis software. As the SEM, for example, "JSM-7800F"(product name) provided by JEOL can be used. As the image analysis software, for example, WinROOF provided by Mitani Corporation can be used.

Specifically, first, a sample of the polycrystalline diamond is produced by cutting edge tip portion 3. A surface of the sample is mirror-polished. Next, a reflected electron image of the mirror-polished surface of the sample is observed with the SEM at a magnification of 5000 times or more and 20000 times or less. Thus, the plurality of diamond grains are specified in the reflected electron image.

The equivalent circle diameter of each of the plurality of diamond grains specified using the image analysis software is calculated. For example, the equivalent circle diameter of each of 100 or more diamond grains is calculated by observing 5 or more visual fields. Next, all the calculated equivalent circle diameters are arranged in an ascending order from the minimum value to the maximum value, thereby finding a cumulative distribution. A grain size corresponding to a cumulative area of 50% in the cumulative distribution is defined as D₅₀. It should be noted that the equivalent circle diameter means the diameter of a circle having the same area as the area of the measured diamond grain.

### (Special Cemented Carbide)

Next, the special cemented carbide will be described in detail. The special cemented carbide has tungsten carbide grains and a binder phase. In the special cemented carbide, a percentage (binder phase content ratio) of a value obtained by dividing the volume of the binder phase by the volume of the whole of the special cemented carbide is 0.7% or more and 28% or less. The binder phase content ratio may be, for example, 2% or more, 10% or more, 15% or more, or 20% or more. The binder phase content ratio may be, for example, 27.5% or less, or 25% or less.

The special cemented carbide may consist of the tungsten carbide grains and the binder phase. In this case, the special cemented carbide may include an inevitable impurity to such an extent that the effects of the present disclosure are not impaired.

The binder phase includes cobalt. The binder phase further includes at least one element (first element) selected from a group consisting of silicon, phosphorus, germanium, tin, rhenium, ruthenium, osmium, iridium, and platinum. It should be noted that the cemented carbide of base body portion 2 does not include the first element. In the present specification, the cemented carbide including no first element is referred to as "cemented carbide" in order to distinguish it from the special cemented carbide.

In the binder phase, a percentage (cobalt content ratio) of a value obtained by dividing the mass of the cobalt by the mass of the whole of the binder phase is 50% or more. The cobalt content ratio may be 50% or more and less than 100%, may be 60% or more and 98% or less, or may be 70% or more and 95% or less.

In the binder phase, a percentage (first element content ratio) of a value obtained by dividing the mass of the first element by the mass of the whole of the binder phase is, for example, 1% or more and 6% or less.

The special cemented carbide may not include: an intermetallic compound consisting of two or more elements selected from a group consisting of the first element, cobalt, and tungsten; and a compound consisting of at least one element selected from a group consisting of the first element, cobalt, and tungsten and at least one element selected from a group consisting of carbon, nitrogen, and oxygen. Here, the above compound does not include tungsten carbide. Thus, it is possible to suppress a decrease in each of the hardness of the special cemented carbide and the strength of the special cemented carbide.

Examples of the intermetallic compound include Co₂Si, Co₃Si, CoSi, and the like. Examples of the compound include Co₃W₃C, Co₆W₆C, and the like. The fact that the special cemented carbide does not includes either of the above intermetallic compound and the above compound can be confirmed by performing structure observation and EDX analysis on the cross section of the special cemented carbide.

The special cemented carbide may include another phase in addition to the tungsten carbide grains and the binder phase. The other phase includes a carbide, nitride or carbonitride including at least one element selected from a group consisting of titanium (Ti), tantalum (Ta), niobium (Nb), zirconium (Zr), hafnium (Hf) and molybdenum (Mo), for example. The other phase includes, for example, TiCN, TaC, NbC, ZrC, HfC, Mo₂C. The other phase may include a metal or alloy including at least one element selected from a group consisting of nickel, chromium, and molybdenum.

The special cemented carbide may consist of the tungsten carbide grains, the binder phase, and the other phase. In this case, the special cemented carbide can include an impurity to such an extent that the effects of the present disclosure are not impaired.

In the special cemented carbide, a percentage (other-phase content ratio) of a value obtained by dividing the volume of the other phase by the volume of the whole of the special cemented carbide is permitted to such an extent that the effects of the present disclosure are not impaired. The other-phase content ratio may be, for example, more than 0% and 11% or less, more than 0% and 7% or less, or more than 0% and 4% or less.

The special cemented carbide may include an impurity. Examples of the impurity include iron (Fe), calcium (Ca), silicon (Si), and sulfur (S). In the special cemented carbide, a percentage (impurity content ratio) of a value obtained by dividing the mass of the impurity by the mass of the whole of the special cemented carbide is permitted to such an extent that the effects of the present disclosure are not impaired. The impurity content ratio may be, for example, 0% or more and less than 0.1%. The impurity content ratio can be measured by an ICP (Inductively Coupled Plasma) emission analysis. In the ICP emission analysis, "ICPS-8100" (trademark) provided by Shimadzu Corporation can be used.

The binder phase content ratio in the special cemented carbide can be measured using the following method.

(A2) The special cemented carbide is cut at any position so as to expose a cross section. The cross section is mirror-polished using a cross section polisher (provided by JEOL).

(B2) The scanning electron microscope-energy dispersive X-ray spectroscopy (SEM-EDX) is used to analyze the mirror-polished cross section. Thus, the elements included in the special cemented carbide are specified. For the SEM-EDX, Gemini 450 (trademark) provided by Carl Zeiss can be used.

(C2) A reflected electron image is obtained by imaging the mirror-polished cross section using the scanning electron microscope (SEM). An imaging region for the reflected electron image is set at a central portion of the cross section of the special cemented carbide. Specifically, the imaging region is set at a position that does not include a portion having a property apparently different from that of a bulk portion, such as the vicinity of the surface of the special cemented carbide. The observation magnification is set to 5000 times. In other words, the imaging region is set such that the imaging region is constituted only of the bulk portion of the special cemented carbide. For measurement conditions, an acceleration voltage is 3 kV, a current value is 2 nA, and a working distance (WD) is 5 mm.

(D2) An analysis is performed on the imaging region set in (C2) using the energy dispersive X-ray spectrometer accompanied with the SEM. A distribution of the elements specified in the imaging region in (B2) above is specified. Thus, an element mapping image is obtained.

(E2) The reflected electron image obtained in (C2) above is loaded into a computer. The reflected electron image is subjected to binarization processing using image analysis software (OpenCV, SciPy). In the image having been through the binarization processing, the tungsten carbide grains are shown in white, and the binder phase is shown in gray or black. It should be noted that since a threshold value for the binarization is changed depending on a contrast, the threshold value is set for each image.

(F2) The element mapping image obtained in (D2) and the image having been through the binarization processing and obtained in (E2) are overlapped with each other. Thus, in the image having been through the binarization processing, a region in which the tungsten carbide grains are present and a region in which the binder phase is present are specified. Specifically, a region which is shown in white in the image having been through the binarization processing and in which tungsten (W) and carbon (C) are present in the element mapping image is the region in which the tungsten carbide grains are present. A region which is shown in gray or black in the image having been through the binarization processing and in which cobalt (Co) is present in the element mapping image is the region in which the binder phase is present.

(G2) One measurement visual field is set in the image having been through the binarization processing. The measurement visual field is a rectangle of 24.9 µm × 18.8 µm. The area percentage of the tungsten carbide grains and the area percentage of the binder phase are found using the image analysis software. Specifically, a value obtained by dividing the area of the tungsten carbide grains in the measurement visual field by the whole of the measurement visual field is regarded as the area percentage of the tungsten carbide grains. A value obtained by dividing the area of the binder phase in the measurement visual field by the whole of the measurement visual field is regarded as the area percentage of the binder phase.

(H2) The measurement in (G2) above is performed in five different measurement visual fields not overlapped with one another. In the present disclosure, the average of the area percentages of the tungsten carbide grains in the five measurement visual fields is regarded as the tungsten carbide grain content ratio of the special cemented carbide. The average of the area percentages of the binder phase in the five measurement visual fields is regarded as the binder phase content ratio of the special cemented carbide.

When the special cemented carbide includes another phase, the content ratio of the other phase of the special cemented carbide is found by subtracting, from 100%, the tungsten carbide grain content ratio and the binder phase content ratio (volume%) measured by the above procedure.

As long as the measurement is performed on the same sample, it has been confirmed that there is substantially no variation in measurement results even when the cut portion of the special cemented carbide for the cross section, the imaging region described in (C2) and the measurement visual fields described in (G2) are freely set, and the tungsten carbide grain content ratio and the binder phase content ratio are measured a plurality of times in accordance with the above procedure.

A method of measuring the content ratio of the cobalt in the binder phase is as follows. In the same manner as in (A2) to (F2) of the method of measuring the content ratio of the tungsten carbide grains and the content ratio of the binder phase of the special cemented carbide, the region in which the binder phase is present is specified on the image having been through the binarization processing. One rectangular measurement visual field of 24.9 µm × 18.8 µm is set in the image having been through the binarization processing. The region in which the binder phase is present in the measurement visual field is analyzed using the SEM-EDX so as to measure the cobalt content ratio of the binder phase. The above measurement is performed in five different measurement visual fields not overlapped with one another. In the present disclosure, the average of the cobalt content ratios of the binder phase in the five measurement visual fields is regarded as the cobalt content ratio of the binder phase.

As long as the measurement is performed on the same sample, it has been confirmed that there is substantially no variation in measurement results even when the cut portion of the special cemented carbide for the cross section and the imaging region described in (C2) are freely set and the measurement of the cobalt content ratio of the binder phase is performed a plurality of times in accordance with the above-described procedure.

The inclusion of the first element in the binder phase is confirmed by the following procedure. In the same manner as in (A2) to (F2) of the method of measuring the content ratio of the tungsten carbide grains and the content ratio of the binder phase of the special cemented carbide, the region in which the binder phase is present is specified on the image having been through the binarization processing. When the region in which the binder phase is present is analyzed using the SEM-EDX and the first element is present in the region in which the binder phase is present, it is confirmed that the binder phase includes the first element.

In the special cemented carbide, the binder phase may include a second element that is at least one selected from a group consisting of iron (Fe), nickel (Ni), and chromium (Cr) in addition to the cobalt and the first element. The binder phase may consist of cobalt, the first element, and the second element. The binder phase may consist of cobalt, the first element, the second element, and an inevitable impurity. Examples of the inevitable impurity include iron (Fe), nickel (Ni), sulfur (S), and the like.

### <Method of Producing Special Cemented Carbide>

A method of producing the special cemented carbide includes a preparation step for raw material powders, a mixing step, a molding step, a sintering step, and a first cooling step. The method of producing the special cemented carbide may further include a HIP (Hot Isostatic Pressing: hot isostatic pressing method) step and a second cooling step. Hereinafter, each of the steps will be described.

### <Preparation Step>

The preparation step is a step of preparing raw material powders of materials for the special cemented carbide. As the raw material powders, a tungsten carbide powder (hereinafter, also referred to as "WC powder"), a cobalt (Co) powder, a first element powder, an alloy powder of the first element and the cobalt, and the like are prepared. As the first element powder, for example, at least one of a silicon (Si) powder, a phosphorus (P) powder, a germanium (Ge) powder, a tin (Sn) powder, a rhenium (Re) powder, a ruthenium (Ru) powder, an osmium (Os) powder, an iridium (Ir) powder, and a platinum (Pt) powder is prepared. As the raw material powders, titanium carbonitride (TiCN), nickel-chromium alloy (NiCr), titanium-niobium carbonitride (TiNbCN), or the like may be further prepared.

As each of the raw material powders, a commercially available powder can be used. The average particle size of the raw material powder is not particularly limited, and can be, for example, 0.5 µm or more and 5 µm or less. The average particle size of the raw material powder is an average particle size measured by the FSSS (Fisher Sub-Sieve Sizer) method. The average particle size can be measured using "Sub-Sieve Sizer model 95" (trademark) provided by Fisher Scientific.

### <Mixing Step>

The mixing step is a step of mixing, at a predetermined ratio, the raw material powders prepared in the preparation step. By the mixing step, a powder mixture in which the respective raw material powders are mixed is obtained. The mixing ratio of the raw material powders is appropriately adjusted in accordance with the composition of the special cemented carbide to be produced.

For the mixing of the raw material powders, a conventionally known mixing method such as an attritor, a ball mill, or a bead mill can be used. Also, for mixing conditions, conventionally known conditions can be used. A mixing time can be, for example, 2 hours or more and 20 hours or less.

After the mixing step, the powder mixture may be granulated as required. By granulating the powder mixture, it is possible to readily fill a die or mold with the powder mixture in the molding step described later. For the granulation, a known granulation method can be used. For the granulation, for example, a commercially available granulator such as a spray dryer can be used.

### <Molding Step>

The molding step is a step of obtaining a molded material by molding the powder mixture obtained in the mixing step into the shape of edge tip portion 3. For a molding method and molding conditions in the molding step, a general method and general conditions may be employed and the molding method and the molding conditions are not particularly limited.

### <Sintering Step>

The sintering step is a step of sintering the molded material obtained in the molding step. Specifically, the molded material is heated to 1400°C at a temperature increase rate of 50°C/min and is held at 1400°C for 60 minutes.

### <First Cooling Step>

In the first cooling step, the molded material sintered is cooled to 800°C. A temperature decrease rate is 80°C/min.

### <HIP Step and Second Cooling Step>

After the first cooling step, the HIP step and the second cooling step may be performed. Thus, the material strength of the special cemented carbide can be improved. The HIP step is a step of performing HIP treatment on the special cemented carbide having been through the first cooling step. In the HIP step, the special cemented carbide is held under conditions of 200 MPa and 1290°C for 60 minutes.

The second cooling step is a step of cooling the special cemented carbide having been through the HIP step. Specifically, the special cemented carbide is cooled to 800°C. The temperature decrease rate is 80°C/min. Thereafter, the special cemented carbide is gradually cooled. For the temperature decrease rate at the time of gradually cooling it, a general condition may be employed, and the temperature decrease rate is not particularly limited.

In the method of producing the special cemented carbide, the temperature increase rate in the sintering step is 50°C/min, which is larger than the general temperature increase rate. Further, the temperature decrease rate in each of the first and second cooling steps is 80°C/min, which is larger than the general temperature decrease rate. With these conditions, it is possible to produce the special cemented carbide in which the binder phase includes 50 mass% or more of the cobalt and the first element that is at least one selected from the group consisting of silicon, phosphorus, germanium, tin, rhenium, ruthenium, osmium, iridium, and platinum. As a result of diligent study by the present inventors, it has been found that the special cemented carbide of the present disclosure can be realized by employing such a temperature increase rate in the sintering step.

Next, the functions and effects of skiving cutter 100 according to the first embodiment will be described.

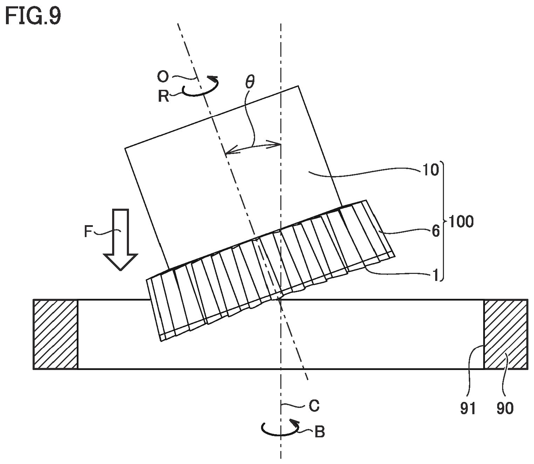

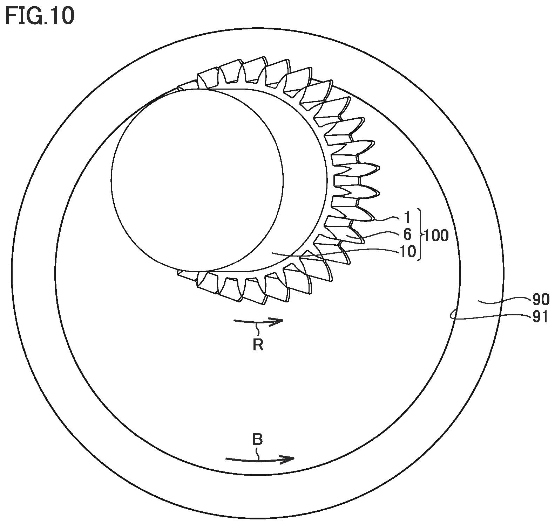

As shown in Figs. 9 and 10, for example, skiving cutter 100 is disposed such that axis O of skiving cutter 100 is inclined by an intersection angle θ with respect to a rotation axis C of a processing-target surface 91 of a workpiece 90. Processing-target surface 91 is, for example, an inner peripheral surface of workpiece 90.

Skiving cutter 100 is rotatable around axis O along rotation direction R. Workpiece 90 is rotatable around rotation axis C along an arrow B. Skiving cutter 100 is movable along an arrow F. A direction of arrow F is a direction from skiving cutter 100 toward workpiece 90 along rotation axis C. The plurality of cutting edges 1 are brought into contact with processing-target surface 91. Thus, the plurality of cutting edges 1 perform cutting onto workpiece 90. As a result, workpiece 90 is processed into, for example, an internal gear shape.

In the skiving process, a cutting edge of the skiving cutter may be significantly worn. For example, when a workpiece composed of a material having high hardness is processed (hard skiving process), the cutting edge may be significantly worn. For example, when a workpiece composed of hardened steel is processed, the cutting edge may be significantly worn due to the high hardness of the hardened steel.

Skiving cutter 100 according to the first embodiment has base body portion 2 and edge tip portion 3. Edge tip portion 3 is contiguous to base body portion 2. Edge tip portion 3 forms the plurality of cutting edges 1. Base body portion 2 is composed of the cemented carbide. Edge tip portion 3 is composed of any one of the cBN sintered material, the diamond, or the special cemented carbide.

For example, the wear resistance of each of the cBN sintered material, the diamond, and the special cemented carbide is higher than the wear resistance of each of the cemented carbide and the high-speed steel. Therefore, in skiving cutter 100 according to the first embodiment, the wear resistance of each of cutting edges 1 can be improved. Thus, the wear of cutting edge 1 can be suppressed.

In skiving cutter 100 according to the first embodiment, the wear of cutting edge 1 can be effectively suppressed even when the workpiece is composed of the hardened steel having the high hardness.

When processing the workpiece composed of the material having the high hardness, force applied to skiving cutter 100 becomes excessively large. Specifically, for example, force applied to cutting edge 1 becomes excessively large. In this case, breakage may occur at a portion of skiving cutter 100 close to cutting edge 1.

For example, the hardness of each of the cBN sintered material, the diamond, and the special cemented carbide is higher than the hardness of each of the cemented carbide and the high-speed steel. Therefore, in skiving cutter 100 according to the first embodiment, the hardness of the portion of skiving cutter 100 close to cutting edge 1 can be improved. Thus, it is possible to prevent the breakage at the portion of skiving cutter 100 close to cutting edge 1.

The toughness of the cemented carbide is higher than the toughness of each of the cBN sintered material, the diamond, and the special cemented carbide. Therefore, since base body portion 2 is composed of the cemented carbide in skiving cutter 100 according to the first embodiment, the toughness of base body portion 2 can be improved. Thus, fracture of skiving cutter 100 can be suppressed.

The thermal conductivity of each of the cBN sintered material, the diamond, and the special cemented carbide is higher than the thermal conductivity of the cemented carbide. Therefore, since edge tip portion 3 is composed of any one of the cBN sintered material, the diamond, or the special cemented carbide, it is possible to suppress thermal wear of the edge tip due to a temperature increase.

In skiving cutter 100 according to the first embodiment, maximum thickness H of edge tip portion 3 in first direction 101 is 0.3 mm or more and 5 mm or less. Since maximum thickness H is 0.3 mm or more, wear of flank face 4 can be effectively suppressed. Since maximum thickness H is 5 mm or less, the fracture of edge tip portion 3 can be suppressed.

In skiving cutter 100 according to the first embodiment, in the cross section perpendicular to each of the plurality of cutting edges 1, curvature radius A of cutting edge 1 is 10 µm or more and 40 µm or less. Since curvature radius A is 10 µm or more, pressure applied to each of the plurality of cutting edges 1 can be reduced. Thus, it is possible to suppress the breakage of the portion of skiving cutter 100 close to each of the plurality of cutting edges 1. Since curvature radius A is 40 µm or less, it is possible to suppress an excessive decrease in the sharpness of each of the plurality of cutting edges 1.

In skiving cutter 100 according to the first embodiment, in the special cemented carbide, the binder phase further includes the first element that is at least one selected from the group consisting of silicon, phosphorus, germanium, tin, rhenium, ruthenium, osmium, iridium, and platinum. Thus, in the special cemented carbide, the hardness and strength of the binder phase can be improved, and interface strength between the tungsten carbide grains can be improved. Therefore, the tool life can be long.

The hardness of the cBN grains is larger than the hardness of the binder. Therefore, as the cBN grain content ratio in the cBN sintered material is higher, the hardness of the cBN sintered material can be higher. In skiving cutter 100 according to the first embodiment, in the cBN sintered material, the percentage of the value obtained by dividing the volume of the cBN grains by the volume of the whole of the cBN sintered material is 50% or more. Therefore, the hardness of the cBN sintered material can be sufficiently increased. Thus, the breakage of edge tip portion 3 can be effectively suppressed.

In skiving cutter 100 according to the first embodiment, the average grain size of the cBN grains is 3 µm or less in the cBN sintered material. Therefore, a clearance between the cBN grains can be small. Thus, in the cBN sintered material, the thickness of the binder having lower fracture toughness than that of each of the cBN grains can be small. Therefore, the breakage of edge tip portion 3 can be effectively suppressed.

In skiving cutter 100 according to the first embodiment, in the cBN sintered material, the binder includes at least one selected from the group consisting of Ti, Co, Al, and Zr. Thus, the wear resistance of the cBN sintered material can be improved. As a result, the wear of edge tip portion 3 can be effectively suppressed.

When rake angle φ1 is excessively large, the portion of skiving cutter 100 close to cutting edge 1 becomes excessively sharp. Therefore, the strength of the portion of skiving cutter 100 close to cutting edge 1 is excessively decreased. In skiving cutter 100 according to the first embodiment, rake angle φ1 is 40° or less. Therefore, the strength of the portion of skiving cutter 100 close to cutting edge 1 can be prevented from being excessively decreased.

In skiving cutter 100 according to the first embodiment, rake angle φ1 may be 5° or more and 15° or less. Thus, the sharpness of cutting edge 1 can be effectively improved. As a result, the wear at the portion of skiving cutter 100 close to cutting edge 1 can be effectively suppressed.

In skiving cutter 100 according to the first embodiment, edge tip portion 3 may be composed of the diamond. The diamond may be the polycrystalline diamond. When the diamond grain content ratio in the polycrystalline diamond is excessively low, the strength of edge tip portion 3 is excessively decreased. In skiving cutter 100 according to the first embodiment, the diamond grain content ratio in the diamond is 80% or more. Thus, the strength of edge tip portion 3 can be suppressed from being excessively decreased.

When the average grain size of the diamond grains is excessively large, insufficient sintering of the diamond grains may occur in the production of the diamond. In this case, the strength of edge tip portion 3 is decreased. In skiving cutter 100 according to the first embodiment, the average grain size of the diamond grains is 100 µm or less. Therefore, the insufficient sintering of the diamond grains can be suppressed. Thus, the strength of edge tip portion 3 can be suppressed from being decreased.

### (Second Embodiment)

Next, a configuration of a skiving cutter 100 according to a second embodiment will be described. Skiving cutter 100 according to the second embodiment is different from skiving cutter 100 according to the first embodiment mainly in that a portion of first bottom surface 30 of edge tip portion 3 is provided outward with respect to base body portion 2, and is substantially the same in the other points as skiving cutter 100 according to the first embodiment. Hereinafter, the difference from skiving cutter 100 according to the first embodiment will be mainly described.

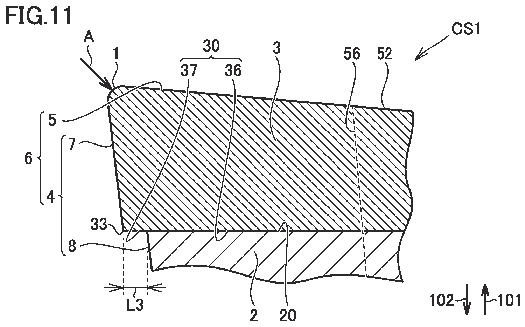

Fig. 11 shows a cross section as shown in Fig. 5. As shown in Fig. 11, a portion of first bottom surface 30 of edge tip portion 3 may be provided outward with respect to base body portion 2. First bottom surface 30 of edge tip portion 3 has a first bottom surface portion 36 and a second bottom surface portion 37.

First bottom surface portion 36 is in contact with base body portion 2. From another viewpoint, it can be said that first bottom surface portion 36 is covered with base body portion 2. In edge tip portion 3, second bottom surface portion 37 is contiguous to each of first flank face portion 7 and first bottom surface portion 36. Second bottom surface portion 37 is located outward with respect to base body portion 2. First flank face portion 7 and second flank face portion 8 are separated from each other.

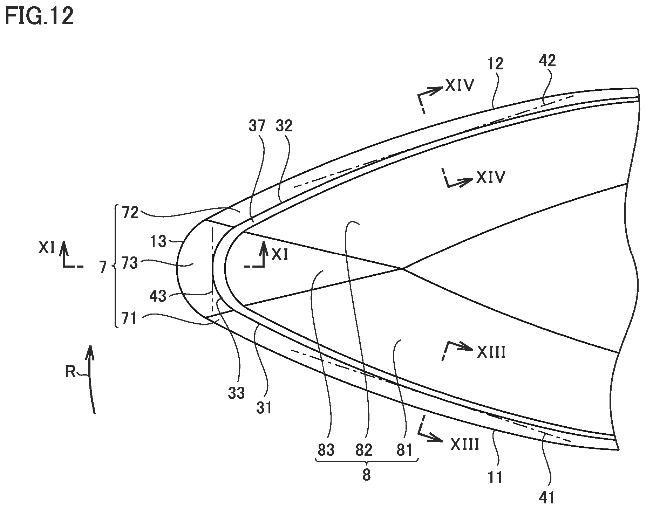

Fig. 12 shows a region XII of Fig. 3. As shown in Fig. 12, second bottom surface portion 37 is provided between first flank face portion 7 and second flank face portion 8.

A ridgeline between first flank face portion 7 and second bottom surface portion 37 forms a first ridgeline portion 31, a corner ridgeline portion 33, and a second ridgeline portion 32. First ridgeline portion 31 is formed by a ridgeline between first portion 71 and second bottom surface portion 37. Corner ridgeline portion 33 is formed by a ridgeline between first corner surface portion 73 and second bottom surface portion 37. Corner ridgeline portion 33 is contiguous to first ridgeline portion 31. Corner ridgeline portion 33 is provided outward in the radial direction with respect to first ridgeline portion 31. As viewed in a bottom view, corner ridgeline portion 33 has, for example, an arc shape.

Second ridgeline portion 32 is formed by a ridgeline between second portion 72 and second bottom surface portion 37. Second ridgeline portion 32 is contiguous to corner ridgeline portion 33. Corner ridgeline portion 33 is provided between first ridgeline portion 31 and second ridgeline portion 32. Second ridgeline portion 32 is provided in rotation direction R with respect to first ridgeline portion 31. Second ridgeline portion 32 faces first ridgeline portion 31.

First ridgeline portion 31 has, for example, a curved shape. A tangent of first ridgeline portion 31 as viewed along axis O is defined as a first tangent 41. Second ridgeline portion 32 has, for example, a curved shape. A tangent of second ridgeline portion 32 as viewed along axis O is defined as a second tangent 42. Corner ridgeline portion 33 has, for example, a curved shape. A tangent of corner ridgeline portion 33 as viewed along axis O is defined as a third tangent 43.

A line XI-XI shown in Fig. 12 indicates the position of the cross section shown in Fig. 11. The cross section shown in Fig. 11 is a cross section perpendicular to third tangent 43. As shown in Fig. 11, in the cross section perpendicular to third tangent 43, the length of second bottom surface portion 37 between corner ridgeline portion 33 and second flank face portion 8 is defined as a third length L3. Third length L3 is, for example, 5 µm or more and 200 µm or less.

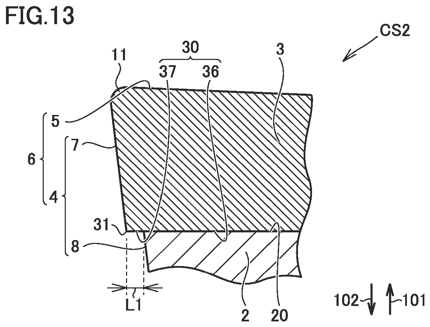

The cross section shown in Fig. 13 is a cross section perpendicular to first tangent 41. Hereinafter, the cross section perpendicular to first tangent 41 is also referred to as a second cross section CS2.

As shown in Fig. 13, in second cross section CS2, the length of second bottom surface portion 37 between first ridgeline portion 31 and second flank face portion 8 is defined as a first length L1. In second cross section CS2, first length L1 is the shortest distance between first ridgeline portion 31 and a connection point between second flank face portion 8 and second bottom surface portion 37. First length L1 is, for example, shorter than third length L3. First length L1 is, for example, 2 µm or more and 150 µm or less. First length L1 may be substantially the same length across the entire length of first ridgeline portion 31.

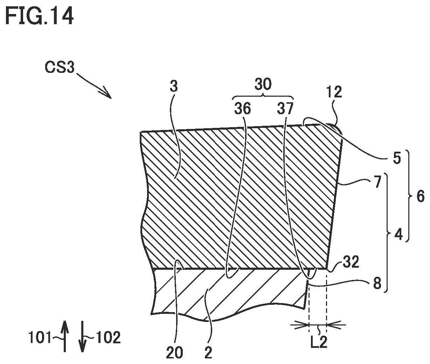

The cross section shown in Fig. 14 is a cross section perpendicular to second tangent 42. Hereinafter, the cross section perpendicular to second tangent 42 is also referred to as a third cross section CS3.

As shown in Fig. 14, in third cross section CS3, the length of second bottom surface portion 37 between second ridgeline portion 32 and second flank face portion 8 is defined as a second length L2. In third cross section CS3, second length L2 is the shortest distance between second ridgeline portion 32 and a connection point between second flank face portion 8 and second bottom surface portion 37. Second length L2 may be equal to first length L1, for example. Second length L2 is shorter than third length L3, for example. Second length L2 may be substantially the same length across the entire length of second ridgeline portion 32.

The wear resistance of second flank face portion 8 composed of the cemented carbide is lower than the wear resistance of first flank face portion 7 composed of the cBN sintered material, the diamond, or the special cemented carbide. In skiving cutter 100 according to the second embodiment, edge tip portion 3 has first bottom surface portion 36 and second bottom surface portion 37. First bottom surface portion 36 is in contact with base body portion 2. Second bottom surface portion 37 is contiguous to each of first flank face portion 7 and first bottom surface portion 36. Second bottom surface portion 37 is provided outward with respect to base body portion 2.

Therefore, in each of the plurality of edge portions 6, second flank face portion 8 is located inward with respect to first flank face portion 7. Thus, it is possible to prevent second flank face portion 8 from coming into contact with workpiece 90 when processing workpiece 90. As a result, wear of flank face 4 can be suppressed. Specifically, wear of flank face 4 in a tooth trace direction can be suppressed.

In skiving cutter 100 according to the second embodiment, since it is possible to prevent second flank face portion 8 from coming into contact with workpiece 90, frictional force generated between each of the plurality of edge portions 6 and workpiece 90 can be reduced. Therefore, it is possible to suppress breakage of each of the plurality of edge portions 6.

As the thickness of a chip is larger, frictional force received by each of the plurality of edge portions 6 from workpiece 90 is larger. Therefore, as the thickness of the chip is larger, flank face 4 is more likely to be worn. As the length of second bottom surface portion 37 in the direction perpendicular to the ridgeline between first flank face portion 7 and second bottom surface portion 37 is longer, the effect of suppressing the wear of flank face 4 is larger. On the other hand, when the length of second bottom surface portion 37 is excessively long, the strength of edge tip portion 3 is decreased. Therefore, it is required to set the length of second bottom surface portion 37 in accordance with the thickness of the chip.

The thickness of the chip may be substantially the same or may be different between two different points on cutting edge 1. Specifically, the thickness of the chip is changed depending on the specifications of skiving cutter 100 and a cutting condition such as intersection angle θ. In skiving cutter 100 according to the second embodiment, first length L1 (see Fig. 12) and second length L2 (see Fig. 13) are equal to each other. Therefore, when the thickness of the chip is substantially the same between the two different points on cutting edge 1, the wear of flank face 4 can be effectively suppressed.

### (Modification of Second Embodiment)

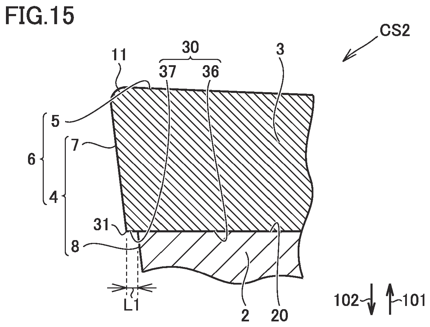

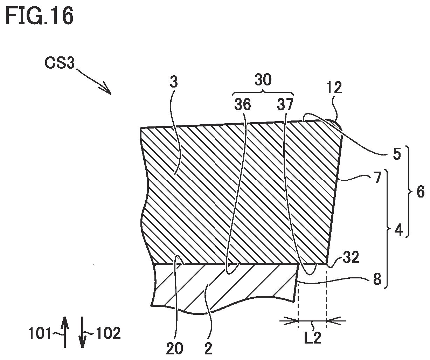

Next, a modification of the second embodiment will be described. Fig. 15 shows a cross section as shown in Fig. 13. Fig. 16 shows a cross section as shown in Fig. 14.

As shown in Figs. 15 and 16, first length L1 may be different from second length L2. For example, first length L1 may be shorter than second length L2. First length L1 may be 0 µm, for example. From another viewpoint, it can be said that first flank face portion 7 and second flank face portion 8 may be smoothly connected to each other in second cross section CS2, and second bottom surface portion 37 may be provided between first flank face portion 7 and second flank face portion 8 in third cross section CS3. Second length L2 may be longer than third length L3 (see Fig. 11).

Conversely, first length L1 may be longer than second length L2. First length L1 may be longer than third length L3 (see Fig. 11). Second length L2 may be 0 µm, for example. From another viewpoint, it can be said that first flank face portion 7 and second flank face portion 8 may be smoothly connected to each other in third cross section CS3, and second bottom surface portion 37 may be provided between first flank face portion 7 and second flank face portion 8 in second cross section CS2.

In skiving cutter 100 according to the modification of the second embodiment, when the thickness of the chip is different between the two different points on cutting edge 1, the wear of flank face 4 can be effectively suppressed.

### (Third Embodiment)

Next, a configuration of a skiving cutter 100 according to a third embodiment will be described. Skiving cutter 100 according to the third embodiment is different from skiving cutter 100 according to the first embodiment mainly in that skiving cutter 100 according to the third embodiment has a coating film 19, and is substantially the same in the other points as skiving cutter 100 according to the first embodiment. Hereinafter, the difference from skiving cutter 100 according to the first embodiment will be mainly described.

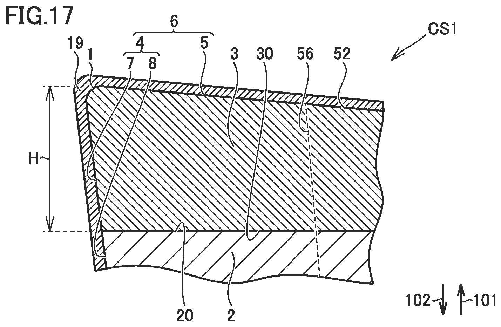

Fig. 17 shows a cross section as shown in Fig. 5. As shown in Fig. 17, skiving cutter 100 may have coating film 19.

Coating film 19 coats at least a portion of edge tip portion 3. Specifically, coating film 19 coats first flank face portion 7. Coating film 19 may coat rake face 5. Coating film 19 may coat a portion of base body portion 2. Specifically, coating film 19 may coat second flank face portion 8. It should be noted that coating film 19 may not coat rake face 5. Coating film 19 is composed of, for example, at least one or more elements selected from a group consisting of Ti (titanium), Zr (zirconium), Hf (hafnium), V (vanadium), Nb (niobium), Ta (tantalum), Cr (chromium), Mo (molybdenum), W (tungsten), Al (aluminum), and Si (silicon), and at least one or more elements selected from a group consisting of C (carbon), N (nitrogen), O (oxygen), and B (boron).

In skiving cutter 100 according to the third embodiment, coating film 19 coats at least a portion of edge tip portion 3. Thus, the wear of edge tip portion 3 can be suppressed.

### (Fourth Embodiment)

Next, a configuration of a skiving cutter 100 according to a fourth embodiment will be described. Skiving cutter 100 according to the fourth embodiment is different from skiving cutter 100 according to the first embodiment mainly in that skiving cutter 100 according to the fourth embodiment has a helical gear shape, and is substantially the same in the other points as skiving cutter 100 according to the first embodiment. Hereinafter, the difference from skiving cutter 100 according to the first embodiment will be mainly described.

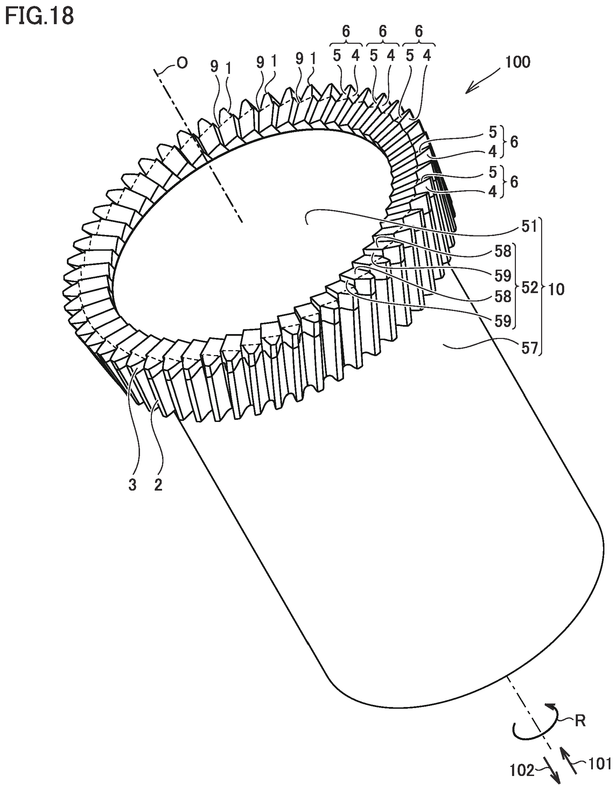

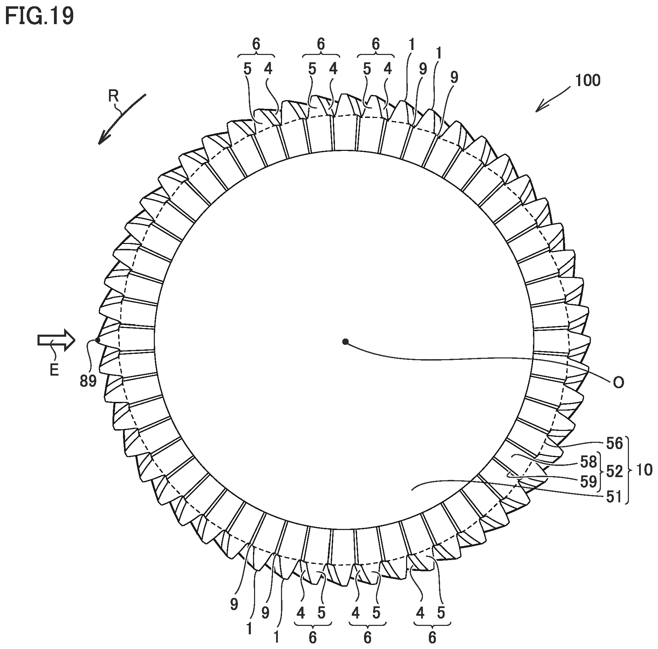

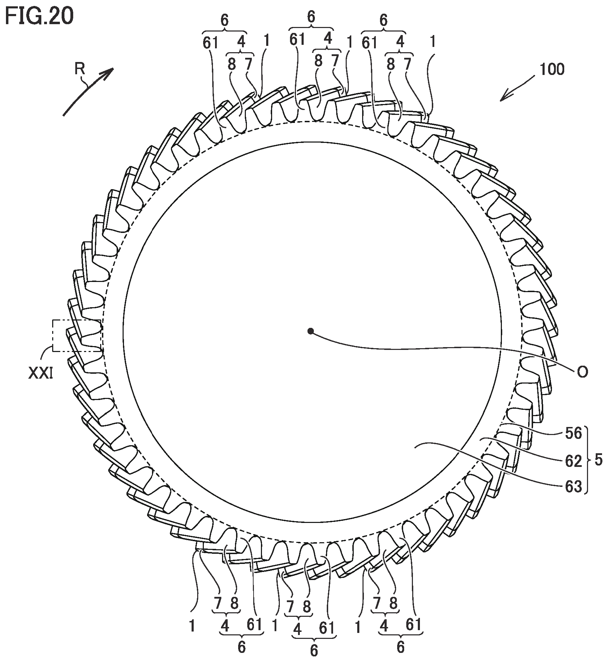

As shown in Figs. 18 to 20, the shape of skiving cutter 100 may be the helical gear shape. Specifically, the direction in which each of the plurality of edge portions 6 extends may be inclined in rotation direction R with respect to axis O. As shown in Figs. 19 and 20, as viewed along axis O, rake face 5 is provided in rotation direction R with respect to first rear end surface 61. Skiving cutter 100 having the helical gear shape is used in processing for forming a spur gear in a workpiece.

As shown in Fig. 18, second front end surface 52 may be formed by a plurality of first inclined surfaces 58 and a plurality of second inclined surfaces 59. Each of the plurality of first inclined surfaces 58 is smoothly connected to one of the plurality of rake faces 5. Each of the plurality of second inclined surfaces 59 is provided between two adjacent first inclined surfaces 58 of the plurality of first inclined surfaces 58. Each of the plurality of second inclined surfaces 59 is contiguous to one of the plurality of flank faces 4. A ridgeline between each of second inclined surfaces 59 and flank face 4 forms a portion of bottom portion 9.

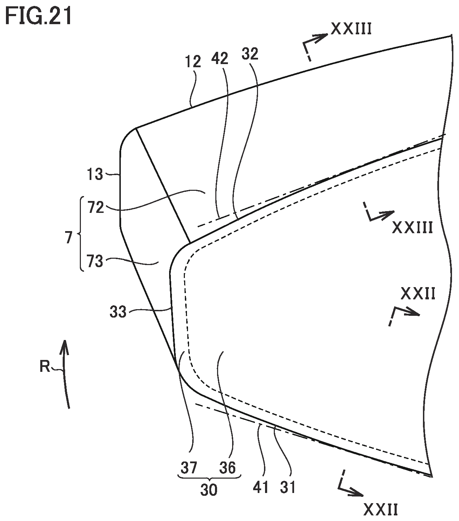

In Fig. 21, a broken line indicates a boundary line between first bottom surface portion 36 and second bottom surface portion 37. As shown in Fig. 21, as viewed in a bottom view, a portion of corner cutting edge portion 13 may be in the form of a straight line. As viewed in the bottom view, a portion of corner ridgeline portion 33 may be in the form of a straight line. For ease of explanation, base body portion 2 is not shown in Fig. 21.

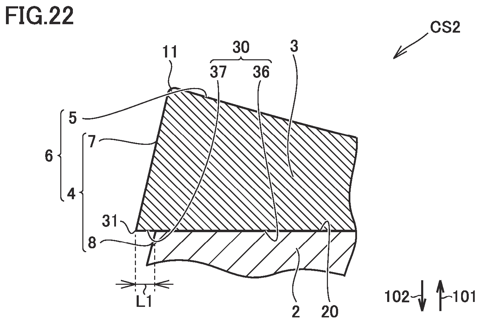

Fig. 22 shows a cross section as shown in Fig. 13. As shown in Fig. 22, in second cross section CS2, first flank face portion 7 is inclined with respect to first direction 101 in a direction from first bottom surface portion 36 toward second bottom surface portion 37. In second cross section CS2, second flank face portion 8 is inclined with respect to first direction 101 in the direction from first bottom surface portion 36 toward second bottom surface portion 37.

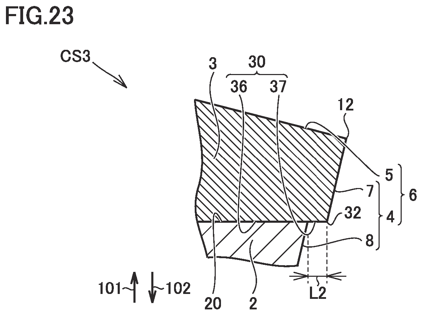

Fig. 23 shows a cross section as shown in Fig. 14. As shown in Fig. 23, in third cross section CS3, rake face 5 is inclined in first direction 101 with respect to a plane perpendicular to axis O. Specifically, rake face 5 is inclined such that a distance between rake face 5 and first bottom surface 30 is longer as further away from second cutting edge portion 12.

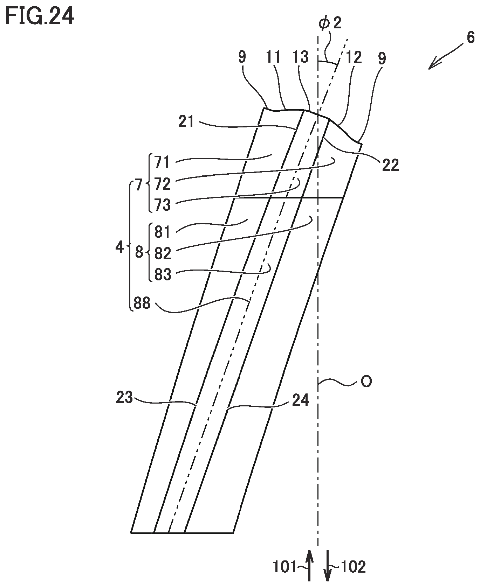

As shown in Fig. 24, ridgeline 88 may be inclined with respect to axis O as viewed in a direction perpendicular to axis O and extending from outermost peripheral point 89 toward axis O. As viewed in the direction perpendicular to axis O and extending from outermost peripheral point 89 toward axis O, an angle between ridgeline 88 and axis O is defined as a twist angle φ2. It should be noted that a direction of arrow E in Fig. 19 is the direction perpendicular to axis O and extending from outermost peripheral point 89 toward axis O. For ease of explanation, only one edge portion 6 is shown in Fig. 24.

Twist angle φ2 is, for example, more than 0° and 40° or less. Twist angle φ2 may be, for example, 5° or more or 15° or more. Twist angle φ2 may be, for example, 35° or less or 30° or less.

Groove processing may be performed onto a workpiece using skiving cutter 100. The groove processing is processing for forming a groove in the workpiece by bringing cutting edge 1 into contact with a surface of the workpiece. When twist angle φ2 is excessively large, a chip having a high temperature due to the cutting rubs and passes on rake face 5 before the temperature of the chip is decreased in the groove processing. Therefore, thermal damage of the portion of edge tip portion 3 close to each of the plurality of cutting edges 1 is excessively progressed. Thus, the tool life becomes excessively short.

In skiving cutter 100 according to the fourth embodiment, twist angle φ2 is 40° or less. Therefore, in the groove processing, the chip is facilitated to be discharged in the direction perpendicular to axis O. Therefore, the chip having the high temperature is less likely to rub and pass on rake face 5. Thus, it is possible to reduce the thermal damage of the portion of edge tip portion 3 close to each of the plurality of cutting edges 1. As a result, the wear of edge tip portion 3 can be suppressed.

### (Fifth Embodiment)

Next, a configuration of a skiving cutter 100 according to a fifth embodiment will be described. Skiving cutter 100 according to the fifth embodiment is different from skiving cutter 100 according to the first embodiment mainly in that a through hole is provided in stem portion 10, and is substantially the same in the other points as skiving cutter 100 according to the first embodiment. Hereinafter, the difference from skiving cutter 100 according to the first embodiment will be mainly described.

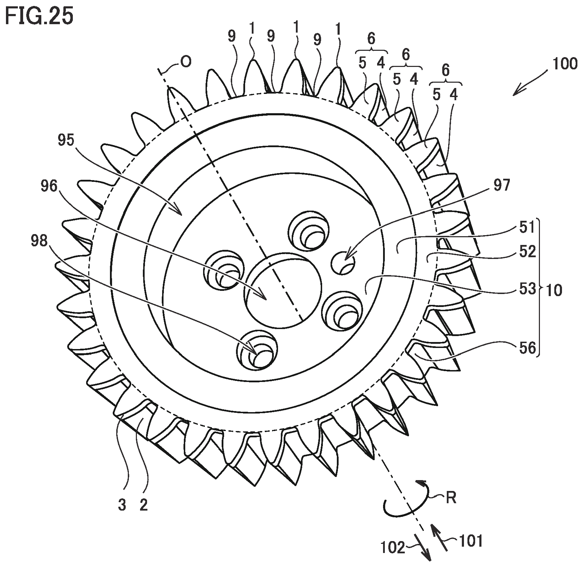

As shown in Fig. 25, a recess 95 may be provided in first front end surface 51. Axis O passes through recess 95. First front end surface 51 surrounds axis O. The shape of first front end surface 51 is an annular shape.

Stem portion 10 has a bottom surface (second bottom surface 53) of recess 95. Second bottom surface 53 is formed by base body portion 2. Second bottom surface 53 is provided with a first through hole 96, a second through hole 97, and a plurality of fastening holes 98.

First through hole 96 has a tapered shape. Therefore, when attaching skiving cutter 100 to a tool spindle (not shown), galling (seizure) can be suppressed. Thus, skiving cutter 100 can be smoothly attached to the tool spindle. Second through hole 97 has a role as a rotation stopper. Specifically, when a portion of the tool spindle is inserted in second through hole 97, skiving cutter 100 can be prevented from being rotated relative to the tool spindle. A screw (not shown) for fastening skiving cutter 100 and the tool spindle is attached to each of the plurality of fastening holes 98.

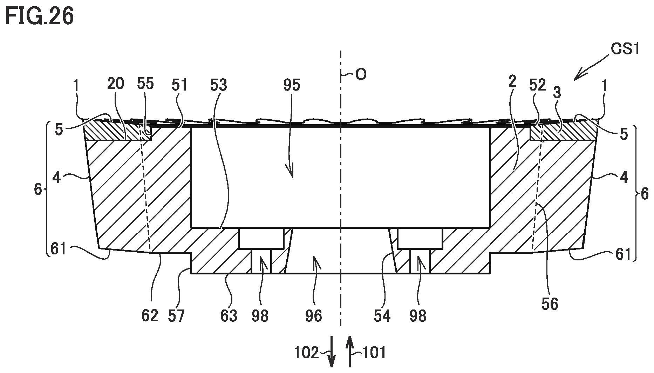

Fig. 26 shows a cross section as shown in Fig. 4. As shown in Fig. 26, axis O passes through first through hole 96. First through hole 96 extends through second bottom surface 53 and third rear end surface 63. Base body portion 2 forms an inner peripheral surface 54. Inner peripheral surface 54 forms first through hole 96.

First through hole 96 extends along axis O. As further away from second bottom surface 53, the diameter of first through hole 96 is larger. From another viewpoint, it can be said that a distance between axis O and inner peripheral surface 54 is longer as further away from second bottom surface 53.

Each of the plurality of fastening holes 98 extends through second bottom surface 53 and third rear end surface 63. Each of the plurality of fastening holes 98 extends along second direction 102. Second through hole 97 (see Fig. 25) extends through second bottom surface 53 and third rear end surface 63.

As shown in Fig. 26, base body portion 2 may have a side wall surface 55. Side wall surface 55 is contiguous to each of seating surface 20 and first front end surface 51. Side wall surface 55 is, for example, perpendicular to seating surface 20. Side wall surface 55 is in contact with edge tip portion 3. As viewed along first direction 101, side wall surface 55 has an annular shape.

It should be noted that it has been described above that edge tip portion 3 is an integrated component; however, the configuration of skiving cutter 100 according to the present disclosure is not limited to such a configuration. Specifically, edge tip portion 3 may be formed by a plurality of components. From another viewpoint, it can be said that skiving cutter 100 may have a plurality of edge tip portions 3. Each of the plurality of edge tip portions 3 forms one of the plurality of cutting edges 1.

Edge tip portion 3 may be attachable to and detachable from base body portion 2. From another viewpoint, it can be said that edge tip portion 3 and base body portion 2 may be separate bodies. For example, when edge tip portion 3 is formed by the plurality of components, edge tip portion 3 may be a plurality of throw-away tips.

### Example 1

### (Preparation of Samples)

An influence of a configuration of a cBN sintered material over the tool life was investigated. First, skiving cutters 100 according to samples 1-1 to 1-19 were prepared. Each of skiving cutters 100 according to samples 1-1 to 1-17 was an example of the present disclosure. Each of skiving cutters 100 according to samples 1-18 and 1-19 was a comparative example.

In each of samples 1-1 to 1-17, edge tip portion 3 was composed of a cBN sintered material. In sample 1-18, edge tip portion 3 was composed of TiN. In sample 1-19, edge tip portion 3 was composed of a cemented carbide.

In each of samples 1-1 to 1-14, the cBN grain content ratio of the cBN sintered material was 50% or more and 100% or less. In each of samples 1-15 to 1-17, the cBN grain content ratio of the cBN sintered material was 15% or more and 45% or less.

In each of samples 1-1 to 1-12 and 1-15 to 1-17, the average grain size of the cBN grains was 0.01 µm or more and 3 µm or less. In each of samples 1-13 and 1-14, the average grain size of the cBN grains was 4 µm or more.

In each of samples 1-1 to 1-3 and 1-11 to 1-17, the binder was composed of TiN. In sample 1-4, the binder was composed of Co. In sample 1-5, the binder was composed of TiC. In sample 1-6, the binder was composed of TiCN. In sample 1-7, the binder was composed of Al₂O₃ and ZrO₂. In sample 1-8, the binder was composed of AIN. In each of samples 1-9 and 1-10, no binder was included. In each of samples 1-1 to 1-19, the number of the plurality of edge portions 6 was 30.

### (Evaluation Method)

Cutting evaluation was performed using each of skiving cutters 100 according to samples 1-1 to 1-19. Specifically, groove processing was performed onto a workpiece using skiving cutter 100. The workpiece was composed of hardened steel. Specifically, the workpiece was composed of chromium molybdenum steel corresponding to SCM415 defined in JIS G 4053:2016. Carburizing and quenching were performed on the workpiece as surface treatment. The hardness of the workpiece was 60 HRC or more.

A module of the workpiece was 1.5. A pressure angle of the workpiece was 20°. The number of teeth of the workpiece was 68.

In the groove processing, a sliding speed was 80 m/min. A cut-in amount was 0.05 mm. A feed amount was 0.03 mm/rev. A cooling condition was WET (water-soluble). Intersection angle θ was 25°. It should be noted that the sliding speed is a relative speed of the skiving cutter with respect to the workpiece at an intersection between the pitch circle of the workpiece and the pitch circle of skiving cutter 100. The cut-in amount is a cut-in amount of the workpiece in a tooth depth direction. The feed amount is an amount of movement of the skiving cutter per rotation of the workpiece.

The tool life was defined as a point of time when breakage occurred at a portion of skiving cutter 100 close to cutting edge 1 or a point of time when the maximum flank face wear width reached 0.2 mm. A cutting time until the tool life was reached was measured. It should be noted that the maximum flank face wear width is the maximum value of the wear width of flank face 4 in the direction in which ridgeline 88 extends.

### (Evaluation Results)

**[Table 1]**

| Sample No. | Material of Edge Tip Portion | Content Ratio of cBN Grains [%] | Average Grain Size of cBN Grains [µm] | Material of Binder | Evaluation Value (Relative Value) |
|---|---|---|---|---|---|
| 1-1 | cBN Sintered Material | 65 | 1 | TiN | 100% |
| 1-2 | cBN Sintered Material | 50 | 1 | TiN | 90% |
| 1-3 | cBN Sintered Material | 80 | 1 | TiN | 85% |
| 1-4 | cBN Sintered Material | 95 | 1 | Co | 105% |
| 1-5 | cBN Sintered Material | 65 | 1 | TiC | 90% |
| 1-6 | cBN Sintered Material | 65 | 1 | TiCN | 95% |
| 1-7 | cBN Sintered Material | 65 | 1 | Al2O3, ZrO2 | 75% |
| 1-8 | cBN Sintered Material | 65 | 1 | AIN | 65% |
| 1-9 | cBN Sintered Material | 100 | 0.01 | - | 130% |
| 1-10 | cBN Sintered Material | 100 | 0.1 | - | 150% |
| 1-11 | cBN Sintered Material | 65 | 0.5 | TiN | 95% |
| 1-12 | cBN Sintered Material | 65 | 3 | TiN | 60% |
| 1-13 | cBN Sintered Material | 65 | 4 | TiN | 40% |
| 1-14 | cBN Sintered Material | 65 | 6 | TiN | 35% |
| 1-15 | cBN Sintered Material | 45 | 1 | TiN | 40% |
| 1-16 | cBN Sintered Material | 30 | 1 | TiN | 35% |
| 1-17 | cBN Sintered Material | 15 | 1 | TiN | 30% |
| 1-18 | TiN | - | - | - | 5% |
| 1-19 | Cemented Carbide | - | - | - | 20% |

In the column for the evaluation value in Table 1, a relative evaluation value is described assuming that the cutting time until the tool life in sample 1-1 was reached is 100%. As shown in Table 1, in each of the samples (samples 1-18 and 1-19) in each of which edge tip portion 3 was not composed of the cBN sintered material, the evaluation value was 20% or less.

On the other hand, in each of the samples (samples 1-1 to 1-17) in each of which edge tip portion 3 was composed of the cBN sintered material, the evaluation value was 30% or more. In each of the samples (samples 1-1 to 1-12) in each of which the cBN grain content ratio was 50% or more and the average grain size of the cBN grains was 3 µm or less, the evaluation value was 60% or more.

As described above, according to each of the samples of the examples of the present disclosure, as compared with each of the samples of the comparative examples, the tool life could be long by suppressing the breakage of edge tip portion 3. Moreover, according to each of the samples in each of which the cBN grain content ratio was 50% or more and the average grain size of the cBN grains was 3 µm or less, the tool life could be effectively long.

### Example 2

### (Preparation of Samples)

An influence of each of rake angle φ1 and twist angle φ2 over the tool life was investigated. First, skiving cutters 100 according to samples 2-1 to 2-10 were prepared. Each of skiving cutters 100 according to samples 2-1 to 2-10 is an example of the present disclosure.

In each of samples 2-1 to 2-8 and 2-10, rake angle φ1 was 0° or more and 40° or less. In sample 2-9, rake angle φ1 was 50°. In each of samples 2-1 to 2-9, twist angle φ2 was 0° or more and 40° or less. In sample 2-10, twist angle φ2 was 50°. In each of samples 2-1 to 2-10, the number of the plurality of edge portions 6 was 30.

### (Evaluation Method)

Cutting evaluation was performed using each of skiving cutters 100 according to samples 2-1 to 2-10. Groove processing was performed onto a workpiece using skiving cutter 100. The workpiece was composed of hardened steel. Specifically, the workpiece was composed of chromium molybdenum steel corresponding to SCM415 defined in JIS G 4053:2016. Carburizing and quenching were performed on the workpiece as surface treatment. The hardness of the workpiece was 60 HRC or more.

A module of the workpiece was 1.5. A pressure angle of the workpiece was 20°. The number of teeth of the workpiece was 68.

In the groove processing, a sliding speed was 80 m/min. A cut-in amount was 0.05 mm. A feed amount was 0.03 mm/rev. A cooling condition was WET (water-soluble). Intersection angle θ was 25°.

The tool life was defined as a point of time when breakage occurred at a portion of skiving cutter 100 close to cutting edge 1 or a point of time when the maximum flank face wear width reached 0.2 mm. A cutting time until the tool life was reached was measured.

### (Evaluation Results)

**[Table 2]**

| Sample No. | Rake Angle [°] | Twist Angle [°] | Evaluation Value (Relative Value) |
|---|---|---|---|
| 2-1 | 0 | 0 | 85% |
| 2-2 | 5 | 0 | 100% |
| 2-3 | 15 | 0 | 105% |
| 2-4 | 10 | 10 | 110% |
| 2-5 | 10 | 25 | 110% |
| 2-6 | 10 | 40 | 105% |
| 2-7 | 20 | 20 | 75% |
| 2-8 | 40 | 20 | 60% |
| 2-9 | 50 | 20 | 20% |
| 2-10 | 10 | 50 | 30% |

In the column for the evaluation value in Table 2, a relative evaluation value is described assuming that the cutting time until the tool life in sample 2-2 was reached is 100%. As shown in Table 2, in sample 2-9 in which rake angle φ1 was 50°, the evaluation value was 20%. In sample 2-10 in which twist angle φ2 was 50°, the evaluation value was 30%.

On the other hand, in each of the samples (samples 2-1 to 2-8) in each of which rake angle φ1 was 40° or less and twist angle φ2 was 40° or less, the evaluation value was 60% or more. In each of the samples (samples 2-2 to 2-6) in each of which rake angle φ1 was 5° or more and 15° or less, the evaluation value was 100% or more.

As described above, since rake angle φ1 was 40° or less and twist angle φ2 was 40° or less, the wear of edge tip portion 3 was suppressed, with the result that the tool life could be long. Moreover, since rake angle φ1 is 5° or more and 15° or less, the wear of edge tip portion 3 can be effectively suppressed.

### Example 3

### (Preparation of Samples)

An influence of a configuration of a diamond of edge tip portion 3 over the tool life was investigated. First, skiving cutters 100 according to samples 3-1 to 3-11 were prepared. Each of skiving cutters 100 according to samples 3-1 to 3-10 is an example of the present disclosure. Skiving cutter 100 according to sample 3-11 was a comparative example.

In each of samples 3-1 to 3-10, edge tip portion 3 was composed of a diamond. Specifically, in each of samples 3-1 to 3-4 and 3-7 to 3-10, edge tip portion 3 was composed of a PCD. In sample 3-5, edge tip portion 3 was composed of a BLPCD. In sample 3-6, edge tip portion 3 was composed of a single-crystal diamond. In sample 3-11, edge tip portion 3 was composed of a cemented carbide.

In each of samples 3-1 to 3-6 and 3-8 to 3-10, the diamond grain content ratio was 80% or more and 100% or less. In sample 3-7, the diamond grain content ratio was 70%. In each of samples 3-1 to 3-5 and 3-7 to 3-9, the average grain size of the diamond grains was 0.01 µm or more and 50 µm or less. In sample 3-10, the average grain size of the diamond grains was 100 µm.

In each of samples 3-1 to 3-4 and 3-7 to 3-10, the binder phase was composed of cobalt. In each of samples 3-5 and 3-6, the diamond had no binder phase.

In each of samples 3-1 to 3-7 and 3-9 to 3-11, rake angle φ1 was 10°. In sample 3-8, rake angle φ1 was 50°. In each of samples 3-1 to 3-8, 3-10, and 3-11, twist angle φ2 was 20°. In sample 3-9, twist angle φ2 was 50°. In each of samples 3-1 to 3-11, the number of the plurality of edge portions 6 was 30.

### (Evaluation Method)

Cutting evaluation was performed using each of skiving cutters 100 according to samples 3-1 to 3-11. Specifically, groove processing was performed onto a workpiece using skiving cutter 100. The workpiece was composed of PEEK (poly ether ether ketone: Poly Ether Ether Ketone). The Rockwell hardness (R scale) was 120.

A module of the workpiece was 1.5. A pressure angle of the workpiece was 20°. The number of teeth of the workpiece was 68.

In the groove processing, a sliding speed was 100 m/min. A cut-in amount was 0.2 mm. A feed amount was 0.06 mm/rev. A cooling condition was WET (water-soluble). Intersection angle θ was 25°.

The tool life was defined as a point of time when breakage occurred at a portion of skiving cutter 100 close to cutting edge 1 or a point of time when the maximum flank face wear width reached 0.2 mm. A cutting time until the tool life was reached was measured.

### (Evaluation Results)

**[Table 3]**

| Sample No. | Diamond Grains | | Binder Phase | Rake Angle [°] | Twist Angle [°] | Evaluation Value (Relative Value) |
|---|---|---|---|---|---|---|
| | Content Ratio [%] | Average Grain Size [µm] | | | | |
| 3-1 | 80 | 5 | Co | 10 | 20 | 100% |
| 3-2 | 90 | 0.5 | Co | 10 | 20 | 110% |
| 3-3 | 90 | 5 | Co | 10 | 20 | 105% |
| 3-4 | 95 | 50 | Co | 10 | 20 | 115% |
| 3-5 | 100 | 0.01 | None | 10 | 20 | 135% |
| 3-6 | 100 | - | None | 10 | 20 | 130% |
| 3-7 | 70 | 5 | Co | 10 | 20 | 40% |
| 3-8 | 90 | 5 | Co | 50 | 20 | 25% |
| 3-9 | 90 | 5 | Co | 10 | 50 | 35% |
| 3-10 | 90 | 100 | Co | 10 | 20 | 10% |
| 3-11 | 0 | - | - | 10 | 20 | 5% |

In the column for the evaluation value in Table 3, a relative evaluation value is described assuming that the cutting time until the tool life in sample 3-1 was reached is 100%. As shown in Table 3, in sample 3-11 in which edge tip portion 3 was not composed of the diamond, the evaluation value was 5%. On the other hand, in each of the samples (samples 3-1 to 3-10) in each of which edge tip portion 3 was composed of the diamond, the evaluation value was 10% or more.

As described above, according to each of the samples of the examples of the present disclosure, as compared with each of the samples of the comparative examples, the tool life could be long. In the sample according to the example of the present disclosure, it is considered that the strength of edge tip portion 3 was improved.

As shown in Table 3, in sample 3-7 in which the diamond grain content ratio was 70%, the evaluation value was 40%. On the other hand, in each of the samples (samples 3-1 and 3-3) in each of which the diamond grain content ratio was 80% or more, the evaluation value was 100% or more. As described above, since the diamond grain content ratio was 80% or more, the tool life could be long. It is considered that since the diamond grain content ratio was 80% or more, the strength of edge tip portion 3 was improved.

As shown in Table 3, in sample 3-10 in which the average grain size of the diamond grains was 100 µm, the evaluation value was 10%. On the other hand, in each of the samples (samples 3-3 and 3-4) in each of which the average grain size of the diamond grains was 50 µm or less, the evaluation value was 105% or more. As described above, since the average grain size of the diamond grains was less than 100 µm, the tool life could be long. In sample 3-10, it is considered that since the average grain size of the diamond grains was 100 µm, insufficient sintering of the diamond grains occurred.

As shown in Table 3, in sample 3-8 in which rake angle φ1 was 50°, the evaluation value was 25%. On the other hand, in sample 3-3 in which rake angle φ1 was 10°, the evaluation value was 105%. As described above, since rake angle φ1 was 40° or less, the tool life could be long.

As shown in Table 3, in sample 3-9 in which twist angle φ2 was 50°, the evaluation value was 35%. On the other hand, in sample 3-3 in which twist angle φ2 was 20°, the evaluation value was 105%. As described above, since twist angle φ2 was 40° or less, the tool life could be long.

As shown in Table 3, in each of the samples (samples 3-5 and 3-6) in each of which the diamond was the BLPCD or the single-crystal diamond, the evaluation value was 130% or more. As described above, since the diamond was the BLPCD or the single-crystal diamond, the tool life could be long.

### Example 4

### (Preparation of Samples)

An influence of a configuration of a cemented carbide of edge tip portion 3 over the tool life was investigated. First, skiving cutters 100 according to samples 4-1 to 4-21 were prepared. Each of skiving cutters 100 according to samples 4-1 to 4-16 is an example of the present disclosure. Each of skiving cutters 100 according to samples 4-17 to 4-21 was a comparative example.

### <Production of Edge Tip Portion>

**[Table 4]**

| Sample No. | Mixing Step | | | | | |
|---|---|---|---|---|---|---|
| | WC Powder | Co Powder | First Element Powder | | Other Powder | |
| | mass% | mass% | Type | mass% | Type | mass% |
| 4-1 | 99.595 | 0.4 | Si | 0.005 | - | - |
| 4-2 | 89.9 | 10 | Si | 0.1 | - | - |
| 4-3 | 89.9 | 10 | Si | 0.1 | - | - |
| 4-4 | 90 | 5 | Re | 5 | - | - |
| 4-5 | 80 | 15 | Re | 5 | - | - |
| 4-6 | 93 | 5 | Re | 1 | NiCr | 1 |
| 4-7 | 89 | 5 | Re | 1 | TiNbCN | 5 |
| 4-8 | 89.4 | 10 | Re | 0.6 | - | - |
| 4-9 | 89.4 | 10 | P | 0.6 | - | - |
| 4-10 | 89.4 | 10 | Ge | 0.6 | - | - |
| 4-11 | 89.9 | 10 | Sn | 0.1 | - | - |
| 4-12 | 89.4 | 10 | Ru | 0.6 | - | - |
| 4-13 | 89.4 | 10 | Os | 0.6 | - | - |
| 4-14 | 89.4 | 10 | Ir | 0.6 | - | - |
| 4-15 | 89.4 | 10 | Pt | 0.6 | - | - |
| 4-16 | 99.4 | 10 | Si, Re | Si: 0.4 Re: 0.2 | - | - |
| 4-17 | 90 | 10 | - | - | - | - |
| 4-18 | 90 | 10 | - | - | - | - |
| 4-19 | 91.5 | 4 | Re | 4.5 | - | - |
| 4-20 | 99.69 | 0.3 | Re | 0.01 | - | - |
| 4-21 | 79 | 16 | Re | 5 | - | - |

**[Table 5]**

| Sample No. | Sintering Step | | | First Cooling Step |
|---|---|---|---|---|
| | Temperature Increase Rate [°C/min] | Holding Temperature [°C] | Holding Time [min] | Temperature Decrease Rate [°C/min] |
| 4-1 | 50 | 1400 | 60 | 80 |
| 4-2 | 50 | 1400 | 60 | 80 |
| 4-3 | 50 | 1400 | 60 | 80 |
| 4-4 | 50 | 1400 | 60 | 80 |
| 4-5 | 50 | 1400 | 60 | 80 |
| 4-6 | 50 | 1400 | 60 | 80 |
| 4-7 | 50 | 1400 | 60 | 80 |
| 4-8 | 50 | 1400 | 60 | 80 |
| 4-9 | 50 | 1400 | 60 | 80 |
| 4-10 | 50 | 1400 | 60 | 80 |
| 4-11 | 50 | 1400 | 60 | 80 |
| 4-12 | 50 | 1400 | 60 | 80 |
| 4-13 | 50 | 1400 | 60 | 80 |
| 4-14 | 50 | 1400 | 60 | 80 |
| 4-15 | 50 | 1400 | 60 | 80 |
| 4-16 | 50 | 1400 | 60 | 80 |
| 4-17 | 50 | 1400 | 60 | 80 |
| 4-18 | 15 | 1400 | 10 | 20 |
| 4-19 | 50 | 1400 | 60 | 80 |
| 4-20 | 50 | 1400 | 60 | 80 |
| 4-21 | 50 | 1400 | 60 | 80 |

**[Table 6]**

| Sample No. | HIP Step | | | Second Cooling Step |
|---|---|---|---|---|
| | Pressure [MPa] | Temperature [°C] | Time [min] | Temperature Decrease Rate [°C/min] |
| 4-1 | 200 | 1290 | 60 | 80 |
| 4-2 | - | - | - | - |
| 4-3 | 200 | 1290 | 60 | 80 |
| 4-4 | 200 | 1290 | 60 | 80 |
| 4-5 | 200 | 1290 | 60 | 80 |
| 4-6 | 200 | 1290 | 60 | 80 |
| 4-7 | 200 | 1290 | 60 | 80 |
| 4-8 | 200 | 1290 | 60 | 80 |
| 4-9 | 200 | 1290 | 60 | 80 |
| 4-10 | 200 | 1290 | 60 | 80 |
| 4-11 | 200 | 1290 | 60 | 80 |
| 4-12 | 200 | 1290 | 60 | 80 |
| 4-13 | 200 | 1290 | 60 | 80 |
| 4-14 | 200 | 1290 | 60 | 80 |
| 4-15 | 200 | 1290 | 60 | 80 |
| 4-16 | 200 | 1290 | 60 | 80 |
| 4-17 | 200 | 1290 | 60 | 80 |
| 4-18 | 10 | 1250 | 15 | 20 |
| 4-19 | 200 | 1290 | 60 | 80 |
| 4-20 | 200 | 1290 | 60 | 80 |
| 4-21 | 200 | 1290 | 60 | 80 |

Edge tip portion 3 of each sample was produced using conditions shown in Tables 4 to 6. Specifically, first, a WC powder, a Co powder, a first element powder, a NiCr powder, and a TiNbCN powder were prepared as raw material powders (preparation step). As the first element powder, a silicon (Si) powder, a rhenium (Re) powder, a phosphorus (P) powder, a germanium (Ge) powder, a tin (Sn) powder, a ruthenium (Ru) powder, an osmium (Os) powder, an iridium (Ir) powder, and a platinum (Pt) powder were prepared. The average particle size of each powder was 1 µm.

The raw material powders were mixed at a ratio shown in Table 4 using an attritor, thereby producing a powder mixture (mixing step). A mixing time was 10 hours. The ratio (mass%) of the raw material powders described in Table 1 is a ratio when the whole of the powder mixture is regarded as 100 mass%.

Next, the powder mixture was pressed to produce a molded material having a shape of edge tip portion 3 (molding step). Thereafter, the molded material was heated to a temperature described in the column "Holding Temperature" at a temperature increase rate described in the column "Temperature Increase Rate" of Table 5. The molded material was held at the temperature for a time described in the column "Holding Time"(sintering step). After the sintering step, the molded material was cooled to 800°C at a temperature decrease rate described in the column "Temperature Decrease Rate" of Table 5 (first cooling step).

In each of samples 4-1, 4-3 to 4-21, the HIP step and the second cooling step were performed. In the HIP step, the pressure described in the column "Pressure" and the temperature described in the column "Temperature" of Table 6 were maintained for a time described in the column "Time".

After the HIP step, the second cooling step was performed. Specifically, it was cooled to 800°C at a temperature decrease rate described in the column "Temperature Decrease Rate" of Table 6. After cooling to 800°C, the molded material was gradually cooled, thereby producing edge tip portion 3 of each sample.

In each of samples 4-1 to 4-16, edge tip portion 3 was composed of the above-described special cemented carbide. The content ratio of the binder phase in the special cemented carbide was 0.73% or more and 27.20% or less. The binder phase included the cobalt and the first element. The cobalt content ratio in the binder phase was 50% or more and 99% or less.

In each of samples 4-17 to 4-21, edge tip portion 3 was composed of the cemented carbide, which is not the above-described special cemented carbide. Specifically, in each of samples 4-17 and 4-18, the binder phase of the cemented carbide of edge tip portion 3 included no first element. In sample 4-19, the cobalt content ratio in the binder phase was 48%. In sample 4-20, the content ratio of the binder phase in the cemented carbide was 0.6%. In sample 4-21, the content ratio of the binder phase in the cemented carbide was 28.8%. In each of samples 4-1 to 4-21, the number of the plurality of edge portions 6 was 30.

### (Evaluation Method)

Cutting evaluation was performed using each of skiving cutters 100 according to samples 4-1 to 4-21. Specifically, groove processing was performed onto a workpiece using skiving cutter 100. The workpiece was composed of hardened steel. Specifically, the workpiece was composed of chromium molybdenum steel corresponding to SCM415 defined in JIS G 4053:2016. Carburizing and quenching were performed on the workpiece as surface treatment. The hardness of the workpiece was 60 HRC or more.

A module of the workpiece was 1.5. A pressure angle of the workpiece was 20°. The number of teeth of the workpiece was 68.

In the groove processing, a sliding speed was 80 m/min. A cut-in amount was 0.05 mm. A feed amount was 0.03 mm/rev. A cooling condition was WET (watersoluble). Intersection angle θ was 25°.

The tool life was defined as a point of time when breakage occurred at a portion of skiving cutter 100 close to cutting edge 1 or a point of time when the maximum flank face wear width reached 0.2 mm. A cutting time until the tool life was reached was measured.

### (Evaluation Results)

**[Table 7]**

| Sample No. | Edge Tip Portion | | | Evaluation Value (Relative Value) |
|---|---|---|---|---|
| | Binder Phase Content Ratio [%] | Co Content Ratio [%] | Presence/Absence of First Element | |
| 4-1 | 0.73 | 99 | Present | 90% |
| 4-2 | 16.8 | 99 | Present | 100% |
| 4-3 | 16.8 | 99 | Present | 110% |
| 4-4 | 12.2 | 50 | Present | 105% |
| 4-5 | 27.2 | 75 | Present | 115% |
| 4-6 | 10.8 | 85 | Present | 110% |
| 4-7 | 9.1 | 85 | Present | 105% |
| 4-8 | 2.4 | 94 | Present | 100% |
| 4-9 | 22.6 | 94 | Present | 110% |
| 4-10 | 9.0 | 94 | Present | 95% |
| 4-11 | 6.5 | 99 | Present | 95% |
| 4-12 | 4.0 | 94 | Present | 95% |
| 4-13 | 2.2 | 94 | Present | 95% |
| 4-14 | 2.2 | 94 | Present | 95% |
| 4-15 | 2.2 | 94 | Present | 95% |
| 4-16 | 2.0 | 94 | Present | 95% |
| 4-17 | 16.3 | 100 | Absent | 40% |
| 4-18 | 16.3 | 100 | Absent | 30% |
| 4-19 | 10.1 | 48 | Present | 40% |
| 4-20 | 0.6 | 97 | Present | 20% |
| 4-21 | 28.8 | 76 | Present | 20% |

In the column for the evaluation value in Table 7, a relative evaluation value is described assuming that the cutting time until the tool life was reached in sample 4-2 is 100%. As shown in Table 7, in each of the samples (samples 4-17 to 4-21) in each of which edge tip portion 3 was not composed of the special cemented carbide, the evaluation value was 40% or less. On the other hand, in each of the samples (samples 4-1 to 4-16) in each of which edge tip portion 3 was composed of the special cemented carbide, the evaluation value was 90% or more.

As described above, according to each of the samples of the examples of the present disclosure, as compared with each of the samples of the comparative examples, the tool life could be long. It is considered that since edge tip portion 3 was composed of the special cemented carbide, the wear resistance of edge tip portion 3 could be improved.

The embodiments and examples disclosed herein are illustrative and non-restrictive in any respect. The scope of the present invention is defined by the terms of the claims, rather than the embodiments and examples described above, and is intended to include any modifications within the scope and meaning equivalent to the terms of the claims.

### REFERENCE SIGNS LIST

1 cutting edge; 2 base body portion; 3 edge tip portion; 4 flank face; 5 rake face; 6 edge portion; 7 first flank face portion; 8 second flank face portion; 9 bottom portion; 10 stem portion; 11 first cutting edge portion; 12 second cutting edge portion; 13 corner cutting edge portion; 19 coating film; 20 seating surface; 21 first boundary line; 22 second boundary line; 23 third boundary line; 24 fourth boundary line; 30 first bottom surface; 31 first ridgeline portion; 32 second ridgeline portion; 33 corner ridgeline portion; 36 first bottom surface portion; 37 second bottom surface portion; 41 first tangent; 42 second tangent; 43 third tangent; 51 first front end surface; 52 second front end surface; 53 second bottom surface; 54 inner peripheral surface; 55 side wall surface; 56 first outer peripheral surface; 57 second outer peripheral surface; 58 first inclined surface; 59 second inclined surface; 61 first rear end surface; 62 second rear end surface; 63 third rear end surface; 71 first portion; 72 second portion; 73 first corner surface portion; 81 third portion; 82 fourth portion; 83 second corner surface portion; 88 ridgeline; 90 workpiece; 91 processing-target surface; 95 recess; 96 first through hole; 97 second through hole; 98 fastening hole; 99 straight line; 100 skiving cutter; 101 first direction; 102 second direction; A curvature radius; B, F arrow; C rotation axis; CS1 first cross section; CS2 second cross section; CS3 third cross section; H maximum thickness; L1 first length; L2 second length; L3 third length; O axis; R rotation direction; θ intersection angle; φ1 rake angle; φ2 twist angle.

## Claims

1. A skiving cutter rotatable around an axis, the skiving cutter being provided with a plurality of cutting edges arranged side by side in a form of an annular shape around the axis, the skiving cutter comprising:
a base body portion; and
an edge tip portion contiguous to the base body portion and provided to be arranged side by side with the base body portion in a first direction toward a front side of the skiving cutter along the axis, wherein
the edge tip portion forms the plurality of cutting edges,
the base body portion is composed of a cemented carbide,
the edge tip portion is composed of any one of a cubic boron nitride sintered material, a diamond, or a special cemented carbide,
the special cemented carbide has tungsten carbide grains and a binder phase including cobalt,
in the special cemented carbide, a percentage of a value obtained by dividing a volume of the binder phase by a volume of a whole of the special cemented carbide is 0.7% or more and 28% or less,
in the binder phase, a percentage of a value obtained by dividing a mass of the cobalt by a mass of a whole of the binder phase is 50% or more, and
the binder phase further includes at least one element selected from a group consisting of silicon, phosphorus, germanium, tin, rhenium, ruthenium, osmium, iridium, and platinum.

2. The skiving cutter according to claim 1, comprising:
a stem portion having an outer peripheral surface provided around the axis; and
a plurality of edge portions each contiguous to the stem portion and each extending from the outer peripheral surface outward in a radial direction, wherein
each of the plurality of edge portions forms one of the plurality of cutting edges,
each of the plurality of edge portions includes
a first flank face portion formed by the edge tip portion and contiguous to a corresponding one of the plurality of cutting edges, and
a second flank face portion formed by the base body portion and provided in a second direction toward a rear side of the skiving cutter along the axis with respect to the first flank face portion,
the edge tip portion has
a first bottom surface portion in contact with the base body portion, and
a second bottom surface portion contiguous to each of the first flank face portion and the first bottom surface portion and provided outward with respect to the base body portion,
a ridgeline between the first flank face portion and the second bottom surface portion has
a first ridgeline portion,
a corner ridgeline portion contiguous to the first ridgeline portion and provided outward in the radial direction with respect to the first ridgeline portion, and
a second ridgeline portion contiguous to the corner ridgeline portion and provided in a rotation direction with respect to the first ridgeline portion, and
when a length of the second bottom surface portion between the first ridgeline portion and the second flank face portion in a cross section perpendicular to a tangent of the first ridgeline portion as viewed along the axis is defined as a first length, and
when a length of the second bottom surface portion between the second ridgeline portion and the second flank face portion in a cross section perpendicular to a tangent of the second ridgeline portion as viewed along the axis is defined as a second length,
the first length is equal to the second length.

3. The skiving cutter according to claim 1, comprising:
a stem portion having an outer peripheral surface provided around the axis; and
a plurality of edge portions each contiguous to the stem portion and each extending from the outer peripheral surface outward in a radial direction, wherein
each of the plurality of edge portions forms one of the plurality of cutting edges,
each of the plurality of edge portions includes
a first flank face portion formed by the edge tip portion and contiguous to a corresponding one of the plurality of cutting edges, and
a second flank face portion formed by the base body portion and provided in a second direction toward a rear side of the skiving cutter along the axis with respect to the first flank face portion,
the edge tip portion has
a first bottom surface portion in contact with the base body portion, and
a second bottom surface portion contiguous to each of the first flank face portion and the first bottom surface portion and provided outward with respect to the base body portion,
a ridgeline between the first flank face portion and the second bottom surface portion has
a first ridgeline portion,
a corner ridgeline portion contiguous to the first ridgeline portion and provided outward in the radial direction with respect to the first ridgeline portion, and
a second ridgeline portion contiguous to the corner ridgeline portion and provided in a rotation direction with respect to the first ridgeline portion, and
when a length of the second bottom surface portion between the first ridgeline portion and the second flank face portion in a cross section perpendicular to a tangent of the first ridgeline portion as viewed along the axis is defined as a first length, and
when a length of the second bottom surface portion between the second ridgeline portion and the second flank face portion in a cross section perpendicular to a tangent of the second ridgeline portion as viewed along the axis is defined as a second length,
the first length is different from the second length.

4. The skiving cutter according to claim 2 or 3, wherein
each of the plurality of edge portions includes
a rake face contiguous to a corresponding one of the plurality of cutting edges and formed by the edge tip portion, and
a rear end surface located opposite to the rake face and formed by the base body portion, and
as viewed along the axis, the rear end surface is overlapped with the rake face.

5. The skiving cutter according to claim 2 or 3, wherein
each of the plurality of edge portions includes
a rake face contiguous to a corresponding one of the plurality of cutting edges and formed by the edge tip portion, and
a rear end surface located opposite to the rake face and formed by the base body portion, and
as viewed along the axis, the rake face is provided in the rotation direction with respect to the rear end surface.

6. The skiving cutter according to any one of claims 1 to 5, wherein a maximum thickness of the edge tip portion is 0.3 mm or more and 5 mm or less in the first direction.

7. The skiving cutter according to any one of claims 1 to 6, further comprising a coating film that coats at least a portion of the edge tip portion.

8. The skiving cutter according to any one of claims 1 to 7, wherein in a cross section perpendicular to each of the plurality of cutting edges, a curvature radius of the cutting edge is 10 µm or more and 40 µm or less.

9. The skiving cutter according to any one of claims 1 to 8, wherein
the edge tip portion is composed of the cubic boron nitride sintered material,
the cubic boron nitride sintered material includes cubic boron nitride grains, and
in the cubic boron nitride sintered material,
a percentage of a value obtained by dividing a volume of the cubic boron nitride grains by a volume of a whole of the cubic boron nitride sintered material is 50% or more and 100% or less, and
an average grain size of the cubic boron nitride grains is 0.01 µm or more and 3 µm or less.

10. The skiving cutter according to claim 9, wherein
in the cubic boron nitride sintered material, the percentage of the value obtained by dividing the volume of the cubic boron nitride grains by the volume of the whole of the cubic boron nitride sintered material is less than 100%,
the cubic boron nitride sintered material includes a binder, and
the binder includes at least one element selected from a group consisting of titanium, cobalt, aluminum, and zirconium.

11. The skiving cutter according to claim 1, comprising:
a stem portion having an outer peripheral surface provided around the axis; and
a plurality of edge portions each contiguous to the stem portion and each extending from the outer peripheral surface outward in a radial direction, wherein
each of the plurality of edge portions forms one of the plurality of cutting edges,
each of the plurality of edge portions includes
a rake face contiguous to a corresponding one of the plurality of cutting edges and formed by the edge tip portion, and
a flank face contiguous to the rake face via the corresponding one of the plurality of cutting edges, and
in each of the plurality of edge portions,
when a point located at an outermost periphery as viewed along the axis is defined as an outermost peripheral point,
in a cross section including the axis and passing through the outermost peripheral point, an angle between a straight line perpendicular to the axis and the rake face is 0° or more and 40° or less, and
as viewed in a direction perpendicular to the axis and extending from the outermost peripheral point toward the axis, an angle between a ridgeline of the flank face and the axis is 0° or more and 40° or less.

12. The skiving cutter according to any one of claims 1 to 11, wherein
the edge tip portion is composed of the diamond,
the diamond is a polycrystalline diamond including a plurality of diamond grains, and
in the diamond, a percentage of a value obtained by dividing a volume of the plurality of diamond grains by a volume of a whole of the diamond is 80% or more and 100% or less.

13. The skiving cutter according to claim 12, wherein an average grain size of the plurality of diamond grains is 0.01 µm or more and less than 100 µm.

14. The skiving cutter according to any one of claims 1 to 11, wherein
the edge tip portion is composed of the diamond, and
the diamond is a single-crystal diamond.
